(19) Europäisches Patentamt
European Patent Office
Office européen des brevets

(11) **EP 2 173 046 A1**

(12) **EUROPEAN PATENT APPLICATION**
published in accordance with Art. 153(4) EPC

(43) Date of publication:
**07.04.2010 Bulletin 2010/14**

(51) Int Cl.:
*H04J 11/00* (2006.01)   *H04B 1/707* (2006.01)

(21) Application number: **08790604.6**

(22) Date of filing: **25.06.2008**

(86) International application number:
**PCT/JP2008/061537**

(87) International publication number:
**WO 2009/001853 (31.12.2008 Gazette 2009/01)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.06.2007 JP 2007167406**

(71) Applicant: **Sharp Kabushiki Kaisha**
**Osaka-shi, Osaka 545-8522 (JP)**

(72) Inventors:
• **SHIMEZAWA, Kazuyuki**
  **Osaka 545-8522 (JP)**
• **YOSHIMOTO, Takashi**
  **Osaka 545-8522 (JP)**
• **YAMADA, Ryota**
  **Osaka 545-8522 (JP)**

(74) Representative: **Müller - Hoffmann & Partner**
**Patentanwälte**
**Innere Wiener Strasse 17**
**81667 München (DE)**

(54) **RECEIVER AND RECEPTION METHOD**

(57)    A reception device includes a block division setting unit which sets a block division setting value based on an arrived delay wave group, a replica signal generating unit which generates a replica signal which is a replica of a transmitted signal based on a received signal, a delay wave removing unit which removes delay waves from the received signal for every time period, the removals being performed by using the block division setting value set by the block division setting unit and the replica signal, a combining unit which combines the signal from which the delay wave was removed, the combining being performed by the combining unit for every time period, and a determining unit which makes determination on the signal combined by the combining unit.

FIG. 1

EP 2 173 046 A1

**Description**

The present invention relates to a reception device and a reception method, especially to a reception device which transmits and receives signals using a multi-carrier system, and a reception method thereof.
Priority is claimed on Japanese Patent Application No. 2007-167406, filed June 26, 2007, the contents of which are incorporated herein by reference.


BACKGROUND ART

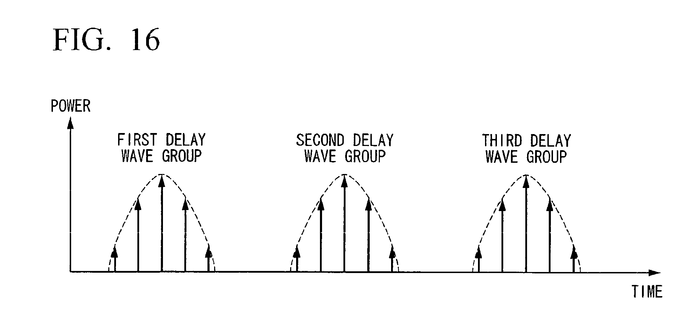

There is a communication using a plurality of paths, for example, a relay communication which uses relay device provided between a base station device and a terminal device, or a multi-hop communication which communicates via a plurality of terminal devices. In such a communication, as shown in FIG. 16, a terminal device has arrivals, with a long delay, delay-waves-groups, each of which is formed by a plurality of delay waves. For example, FIG. 16 shows that three delay wave groups are arrived.
In FIG. 16, the horizontal axis indicates a time, and the vertical axis indicates temporally power of a reception waves which are received by the terminal device. As shown in the figure, a first delay wave group, a second delay wave group, and a third delay wave group are sequentially arrived at the terminal device with guard intervals.
In such environment, the delay wave arrives with a larger delay than the guard interval (GI). The guard interval is a redundancy portion which is added to a data signal when the data is transmitted in the multi-carrier system.
In multi-carrier transmission, if the delay is larger than the guard interval, an inter symbol interference (ISI) or an inter carrier interference (ICI) is caused. If previous symbol enters to FFT (Fast Fourier Transform) interval, the inter symbol interference (ISI) is caused. If a break of symbol (in other words discontinuous interval) enters to the fast Fourier transform interval, the inter carrier interference (ICI) is caused.

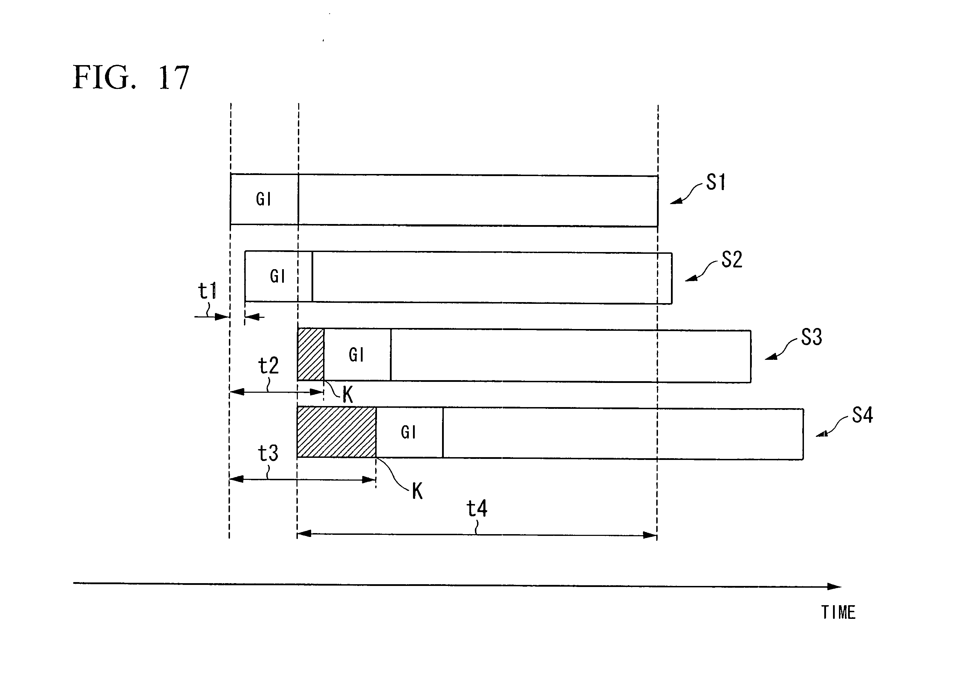

FIG. 17 is a diagram showing signals which arrive from a wireless transmission device to a wireless reception device via multi-pass environment. The horizontal axis represents time. The symbols s1 to s4 indicate signals which are transmitted from the wireless transmission device to the wireless reception device via four multi-paths in the multi-path environment. The first half of the symbol is added with the guard interval GI which is a copy of the latter half of the symbol is added.
The first signal s1 from the top indicates a direct wave. The second wave s2 indicates a delay wave having a delay t1 which is shorter than the guard interval GI. In addition, the signals s3 and s4 indicate the third and fourth delay waves having delays t2 and t3 respectively, wherein the both delays t2 and t3 are longer than the guard interval GI.
The hatched portions which are followed by the third and fourth delay wave signals s3 and s4 indicate time-overlap between a previous symbol and a FFT interval of the follower symbol. The interval t4 indicates the FFT interval of the predetermined symbol, and the hatched portion is the ISI component. The ISI is an interference component. The ISI component causes deterioration in the demodulation performance. The third and fourth delay wave signals s3 and s4 each have the head K of the symbol, wherein the head K is positioned in the interval t4, leading to the inter carrier interference (ICI).

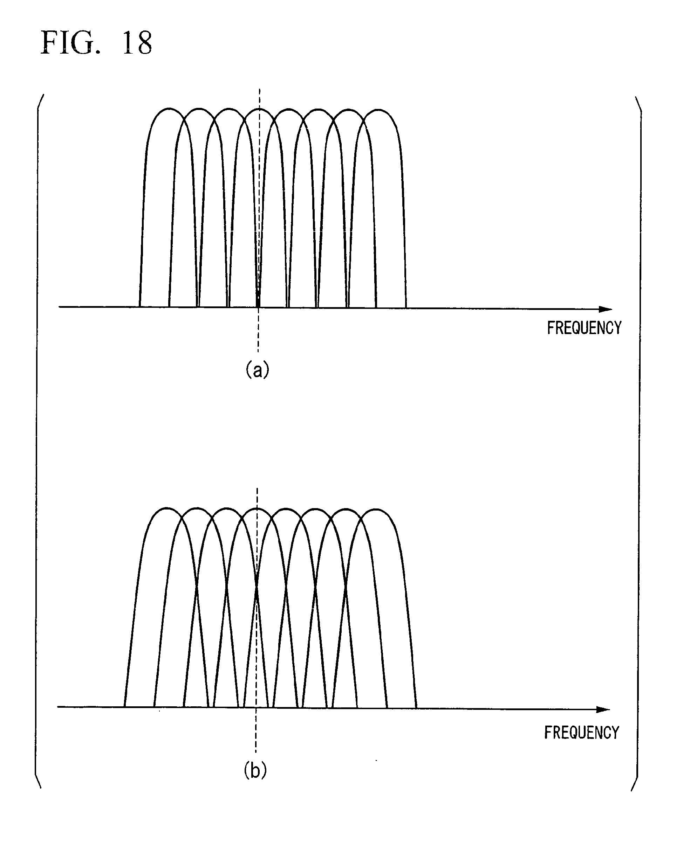

FIG. 18(a) and FIG. 18(b) are diagrams showing a state that orthogonality between sub-carriers is established, and a state that interference between sub-carriers by ICI is occurred in a transmission and reception of signals in a multi-carrier system. FIG. 18(a) indicates a state that the ICI does not occur, and the interference does not occur between the sub-carriers. FIG. 18(b) indicates a state that the interference occurs between the sub-carriers by the ICI.
If the delay wave which is over the guard interval does not exist, as shown a frequency of the dotted portion in FIG. 18(a), only one sub-carrier element is included, and other sub-carrier element is not included. Such status is that the orthogonality between the sub-carriers is maintained. In the normal multi-carrier communication, the demodulation is performed in this status.
In contrast this, if the delay wave which is over the guard interval GI exists, as shown a frequency of the dotted portion in FIG. 18(b), not only the predetermined sub-carrier element but neighbor sub-carrier element is included, and the interference occurs. Such status is that the orthogonality between the sub-carriers is not maintained. The ICI element becomes a reason of the characteristics depletion.
The method which improves the characteristics depletion by the ISI and the ICI when the delay wave which is over the guard interval GI is disclosed in the Non Patent Document 1. In this related art, the demodulation process is performed once, the copy signal (replica signal) which is except for the predetermined signal and includes the ISI component and the ICI element is generated using the error correction result (output of the MAP decoder), and the signal (the signal is that the generated signal is removed from the received signal) is performed demodulation process again. Therefore, the characteristics stem from the ISI and ICI is improved.
On the other hand, the MC-CDM (Multi Carrier-Code Division Multiplexing) which combines the multi-carrier transmission system and the CDM (Code Division Multiplexing) is proposed.

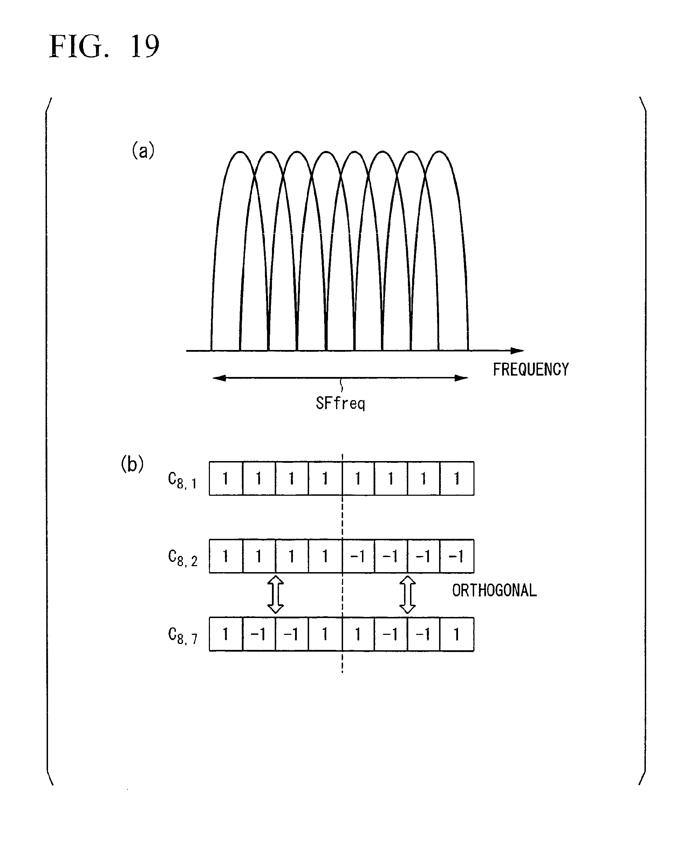

FIG. 19(a) and FIG. 19(b) are diagrams showing a relation of orthogonal code corresponds to sub-carrier in an MC-CDMA and each sub-carrier. In these figures, the horizontal axis is a frequency. FIG. 19(a) indicates eight sub-carriers in the MC-CDM system. In addition, FIG. 19(b) indicates three types $C_{8,1}$, $C_{8,2}$, $C_{8,7}$ as the orthogonal codes which correspond each sub-carriers. In addition, $C_{8,1}$=(1,1,1,1,1,1,1,1), $C_{8,2}$=(1,1,1,1,-1,-1,-1,-1), and $C_{8,7}$=(1,-1,-1,1,1,-1,-1,1). By multiplexing these three types orthogonal codes to the data, three data sequences are multiplied and communicated using the same time and same frequency. This is one of the features of the MC-CDM system.

In addition, all three kinds of code $C_{8,1}$, $C_{8,2}$ and $C_{8,7}$ are the orthogonal codes whose cycles are eight, and by adding during the one cycle, it is possible to separate the data between the orthogonal codes. $SF_{freq}$ in FIG. 19(a) indicates the cycle of the orthogonal code. For example, the inner product of $C_{8,1}$ and $C_{8,1}$ is one. In contrast to this, the inner product of $C_{8,1}$ and $C_{8,2}$ is zero.

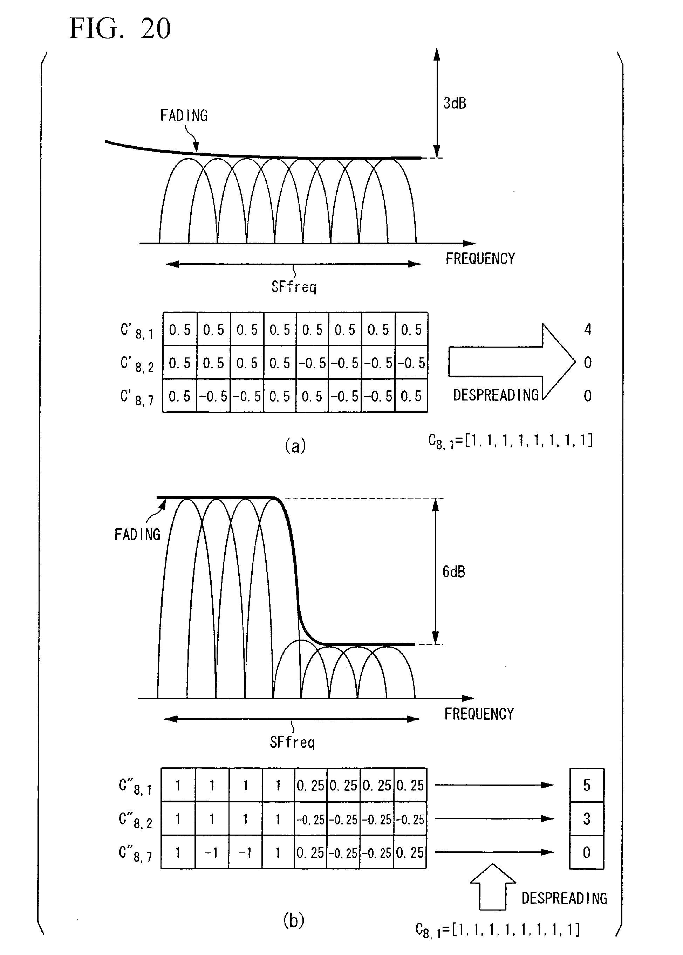

FIG. 20(a) and FIG. 20(b) are diagrams showing a state of code $C'_{8,1}$, $C'_{8,2}$, $C'_{8,7}$, $C''_{8,1}$, $C''_{8,2}$ and $C''_{8,7}$ which are received by the wireless reception device when a signal of the MC-CDMA system is transmitted in an air. FIG. 20 (a) shows that the frequency change does not exist during the cycle of the orthogonal code. In this case, the de-spreading is performed using $C'_{8,1}$. If the inner product with $C'_{8,1}$ is calculated (in other words, if all values in $Sf_{freq}$ are added), $C'_{8,1}$ is four, $C'_{8,2}$ and $C'_{8,7}$ are zero. Such state is called that the orthogonality between codes is maintained.

In contrast to this, when the frequency change during the cycle of the orthogonal code exists like FIG. 20(b), if the de-spreading using $C'_{8,1}$ is performed (in other words, if the inner product with $C''_{8,1}$ is calculated), $C''_{8,1}$ is five, $C''_{8,2}$ is three, and $C''_{8,7}$ is zero. In other words, the interference component between $C''_{8,1}$ and $C''_{8,2}$ exists, the orthogonality between codes is not maintained. Like this, if the frequency change of the channel is fast (change rapidly along frequency), the multi code interference become a cause of the characteristics depletion in the MC-CDMA system.

The method for improving the characteristics depletion stem from the collapse of the orthogonality between codes is disclosed in the Patent Document 2 and the Non Patent Document 1. In these related art, the difference whether the uplink or the downlink exists. But, both of them improve characteristics by removing the signal except for the predetermined code, using the data after the error correction or the de-spreading, to remove the multi code interference stem from the code multiplexing during the MC-CDMA communication.

Patent Document 1: Japanese Unexamined Patent Publication, First Publication No. 2004-221702
Patent Document 2: Japanese Unexamined Patent Publication, First Publication No. 2005-198223
Non Patent Document 1: "Downlink Transmission of Broadband OFCDM Systems-Part I: Hybrid Detection", Zhou, Y.; Wang, J.; Sawahashi, M.Page(s): 718- 729, IEEE Transactions on Communication(Vol.53, Issue4)

DISCLOSURE OF INVENTION

Problem to be Solved by the Invention

However, in the aforementioned related art, the calculation amount of demodulating the multi-carrier whose sub-carrier number is large and the MC-CDM signal increases. In addition, the calculation amount increases with code multiplexing number, when the multi code interference during the MC-CDM is removed.

The present invention is created in light of aforementioned circumstances, and an object thereof is to provide a reception device and a reception method capable of decreasing the calculation of demodulating the signal received from a transmission device. Means for Solving the Problem

(1) According to one aspect of the present invention, there is provided a reception device comprising: a block division setting unit which sets a block division setting value based on an arrived delay wave group; a replica signal generating unit which generates a replica signal which is a replica of a transmitted signal based on a received signal; a delay wave removing unit which removes delay waves from the received signal for every time period, the removals being performed by using the block division setting value set by the block division setting unit and the replica signal; a combining unit which combines the signal from which the delay wave was removed, the combining being performed by the combining unit for every time period; and a determining unit which makes determination on the signal combined by the combining unit.

(2) Moreover, in the above described reception device, wherein the block division setting unit performs clustering the delay wave groups based on a starting point and a terminal point of each delay wave group, and the block division setting unit sets the block division setting value based on the clustered delay wave group as a cluster.

(3) Moreover, in the above described reception device, wherein the block division setting unit removes a cluster from a block, provided that the cluster is set at least one of power, path number and time being smaller than respective predetermined values.

(4) Moreover, in the above described reception device, wherein the block division setting unit uses a cluster as the same block of other cluster, the cluster has at least one of power, path number and time being smaller than respective predetermined values.

(5) Moreover, in the above described reception device, wherein the block division setting unit sets the starting point and the terminal point of the delay wave group based on a predetermined power.

(6) Moreover, in the above described reception device, wherein the block division setting unit sets the starting point and the terminal point of the delay wave group based on an extremal value of a channel impulse response estimation value.

(7) Moreover, in the above described reception device, wherein the block division setting unit sets the starting point and the terminal point of the delay wave group based on at least one of a tangential angle and a slope of a channel impulse response value.

(8) Moreover, in the above described reception device, wherein the block division setting unit sets the starting point and the terminal point of the delay wave group based on a combination of a predetermined power, an absolute value of a channel impulse response estimation value, a tangential angle and a slope of the channel impulse response estimation value.

(9) According to another aspect of the present invention, there is provided a reception device comprising: a block division setting step which sets a block division setting value based on an arrived delay wave group; a replica signal generating step which generates a replica signal which is a replica of a transmitted signal based on a received signal; a delay wave removing step which removes delay waves from the received signal for every time period, the removals being performed by using the block division setting value set by the block division setting step and the replica signal; a combining step which combines the signal which was removed the delay wave by the combining step for every time period; and a determining step which makes determination on the signal combined by the combining step.

Effect of the Invention

According to the reception device and the reception method of the present invention, it is possible to decrease the calculation of demodulating the signal received from a transmission device.

BRIEF DESCRIPTION OF THE DRAWINGS

FIG. 1 is a schematic block diagram showing a wireless transmission device which transmits a signal to a wireless reception device according to a first embodiment of the present invention.

FIG. 2 is a diagram showing a frame format of a multi-carrier signal transmitted from the wireless transmission device to the wireless reception device.

FIG. 3 is a schematic diagram showing a configuration of the wireless reception device according to the first embodiment of the present invention.

FIG. 4 is a diagram showing a configuration of a MAP detecting unit according to the first embodiment of the present invention.

FIG. 5 is a flowchart showing an operation of the wireless reception device according to the first embodiment of the present invention.

FIG. 6 is a diagram showing channel impulse response estimation values according to the first embodiment of the present invention.

FIG. 7 is a diagram showing channel impulse response estimation value in a soft canceller block unit according to the first embodiment of the present invention.

FIG. 8 is a diagram showing a channel and noise power estimating unit according to the first embodiment of the present invention.

FIG. 9 is an explanation diagram of a clustering according to a second embodiment of the present invention.

FIG. 10 is an explanation diagram of a clustering according to a third embodiment of the present invention.

FIG. 11 is an explanation diagram which compares the clustering between the first embodiment and the third embodiment of the present invention.

FIG. 12 is an explanation diagram of a clustering according to a fourth embodiment of the present invention.

FIG. 13 is an explanation diagram of a clustering according to a fifth embodiment of the present invention.

FIG. 14 is an explanation diagram of a clustering according to a sixth embodiment of the present invention.

FIG. 15 is an explanation diagram of a clustering according to a seventh embodiment of the present invention.

FIG. 16 is an explanation diagram of delay wave groups.

FIG. 17 is a diagram showing signals which arrive from a wireless transmission device to a wireless reception device via multi-pass environment.

FIG. 18 is a diagram showing a state that orthogonality between sub-carriers is established, and a state that interference between sub-carriers by ICI is occurred in a transmission and reception of signals in a multi-carrier system.

FIG. 19 is a diagram showing a relation of orthogonal code corresponds to sub-carrier in an MC-CDMA and each sub-carrier.

FIG. 20 is a diagram showing a state of code which is received by the wireless reception device when a signal of the MC-CDMA system is transmitted in an air. Reference Symbols

1 ... S/P converting unit
2-1 to 2-4 ... every code signal processing unit
3 ... error correction coding unit
4 ... bit interleaving unit
5 ... modulating unit
6 ... symbol interleaving unit
7 ... frequency time spreading unit
8 ... DTCH multiplexing unit
9 ... PICH multiplexing unit
10 ... scrambling unit
11 ... IFFT unit
12 ... GI inserting unit
21 ... symbol synchronizing unit
22 ... channel and noise power estimating unit
23 ... MAP detecting unit
24-1 to 24-4 ... every code MAP decoding unit
25 ... bit de-interleaving unit
26 ... MAP decoding unit
27 ... adding unit
28 ... replica signal generating unit
29-1 to 29-4 ... every code symbol generating unit
30 ... bit interleaving unit
31 ... symbol generating unit
32 ... symbol interleaving unit
33 ... frequency time spreading unit
34 ... DTCH multiplexing unit
35 ... PICH multiplexing unit
36 ... scrambling unit
37 ... IFFT unit
38 ... GI inserting unit
39 ... P/S converting unit
41 ... delay wave replica generating unit
42 ... adding unit
43 ... GI removing unit
44 ... FFT unit
45-1 to 45-3 ... soft canceller block unit
46 ... MMSE filtering unit
47-1 to 47-4 ... every code log likelihood ratio outputting unit
48 ... despreading unit
49 ... symbol de-interleaving unit
50 ... soft decision outputting unit
61 ... channel estimating unit
62 ... preamble replica generating unit
63 ... noise power estimating unit
70 ... MAC unit
71 ... filtering unit
72 ... D/A converting unit
73 ... frequency converting unit
74 ... transmission antenna
75 ... reception antenna
76 ... frequency converting unit
77 ... A/D converting unit
79 ... block division setting unit

BEST MODE FOR CARRYING OUT THE INVENTION

(First Embodiment)

In a first embodiment, a wireless reception device which is able to obtain good characteristics even if the ISI and the ICI which stem from the delay wave which is over the guard interval or the multi code interference which stem from the frequency selectivity of the channel is described.

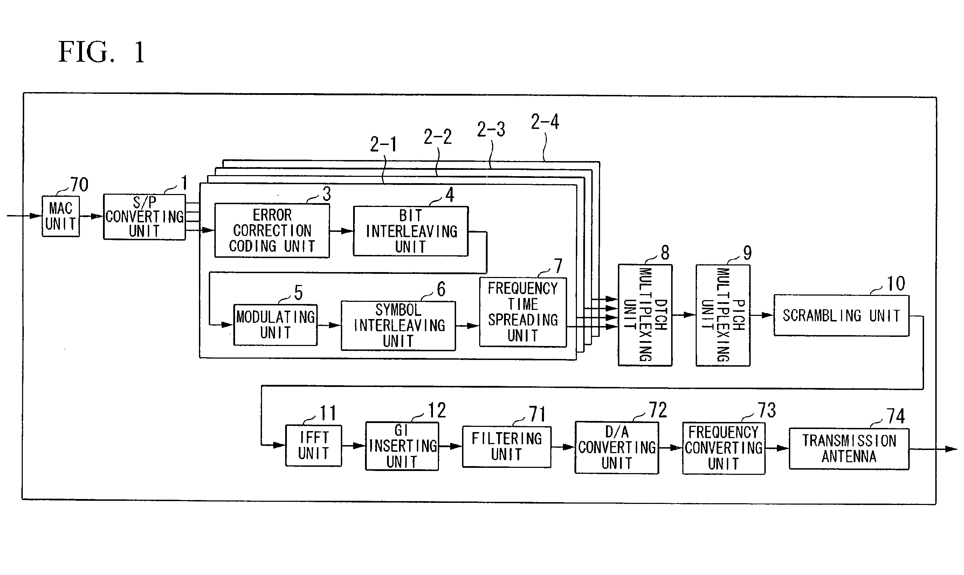

FIG. 1 is a schematic block diagram showing a wireless transmission device which transmits a signal to a wireless reception device according to a first embodiment of the present invention. The wireless transmission device includes a S/P (Serial / Parallel) converting unit 1, every code signal processing units 2-1 to 2-4, a DTCH (Data Traffic Channel) multiplexing unit 8, a PICH (Pilot Channel) multiplexing unit 9, a scrambling unit 10, an IFFT (Inverse Fast Fourier Transform) unit 11, and a GI inserting unit 12.

Each every code signal processing units 2-1 to 2-4 includes an error correction coding unit 3, a bit interleaving unit 4, a modulating unit 5, a symbol interleaving unit 6, a frequency time spreading unit 7.

The S/P converting unit 1 is supplied information signal from a MAC (Media Access Control) unit 70, and the output of the S/P converting unit 1 which was performed the serial to parallel conversion is supplied to the every code signal processing units 2-1 to 2-4. In addition, the configuration of the every code signals processing units 2-2 to 2-4 are same as the every code signal processing unit 2-1. Therefore, the every code signal processing unit 2-1 is only described.

The error correction coding unit 3 performs the error correction coding process (for example, the turbo coding, the LDPC (Low Density Parity Check), or convolution coding) to the signal which is supplied to the every code processing unit 2-1. The bit interleaving unit 4 suitably replaces the order for every bit to the output of the error correction coding unit 3 for improving the occurrence of the burst error which stem from the depletion of the received power by the frequency selective fading, and supplies the signal.

The modulating unit 5 performs the symbol modulation process (for example, the BPSK (Binary Phase Shift Keying), the QPSK (Quadrature Phase Shift Keying), the 16QAM (16 Quadrature Amplitude Modulation), or the 64QAM (64 Quadrature Amplitude Modulation)) to the output of the bit interleaving unit 4. The symbol interleaving unit 6 suitably replaces the order every symbol to the output of the modulating unit 5 for improving the burst error. The frequency time spreading unit 7 spreads the output of the symbol interleaving unit 6 using the predetermined spreading code (the channelization code). The OVSF (Orthogonal Variable Spread Factor) code is used as the spreading code, however, other spreading code may be used.

In addition, the wireless transmission device includes the code multiplexing number $C_{mux}$ ($C_{mux}$ is a natural number which is equal to 1 or greater than 1) of the every code signal processing units 2-2 to 2-4. In this case, $C_{mux}=4$. The every code signal processing unit 2-1 supplies the signal which was spread using the different spreading code, and the DTCH multiplexing unit 8 performs the multiplexing (the adding process). Next, the PICH multiplexing unit 9 inserts the pilot channel PICH for using the channel estimation into the predetermined position (the time multiplexing).

Then, the scrambling unit 10 performs the scrambling using the scrambling code which is peculiar to the base station device, the IFFT unit 11 performs the frequency time conversion. Next, the GI inserting unit 12 inserts the guard interval GI, the filtering unit 71 performs the filtering process, the D/A (Digital / Analog) converting unit 72 performs the digital analog conversion process, the frequency converting unit 73 performs the frequency conversion process to the wireless frequency, and the signal transmitted as the transmitted signal to the wireless reception device via the transmission antenna 74.

In FIG. 1, the every code signal processing units 2-2 to 2-4 includes both the bit interleaving unit 4 and the symbol interleaving unit 6, however, either of them may be omitted. In addition, the every code signal processing units 2-2 to 2-4 may not include both the bit interleaving unit 4 and the symbol interleaving unit 6.

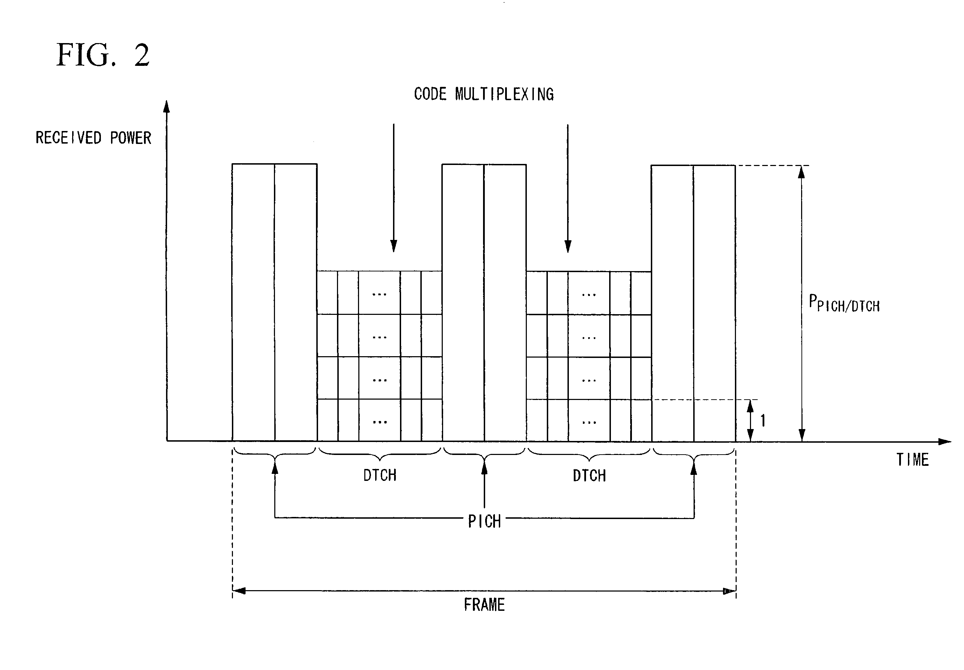

FIG. 2 is a diagram showing a frame format of a multi-carrier signal transmitted from the wireless transmission device to the wireless reception device. In FIG. 2, the horizontal axis is a time, and the vertical axis is a received power. As shown in the figure, the pilot channels PICH are assigned to front, rear and center of the flame. The data traffic channels for using the data transmission are assigned to the first half and the latter half of the one flame, and the signals which were spread using the $C_{mux}$ of different spreading codes are performed the code multiplexing. The state that $C_{mux}=4$ and four data are piled is schematically is shown. The ratio of the received power of the pilot channel PICH and the received power of the data traffic channel every one code is shown as $P_{PICH/DTCH}$.

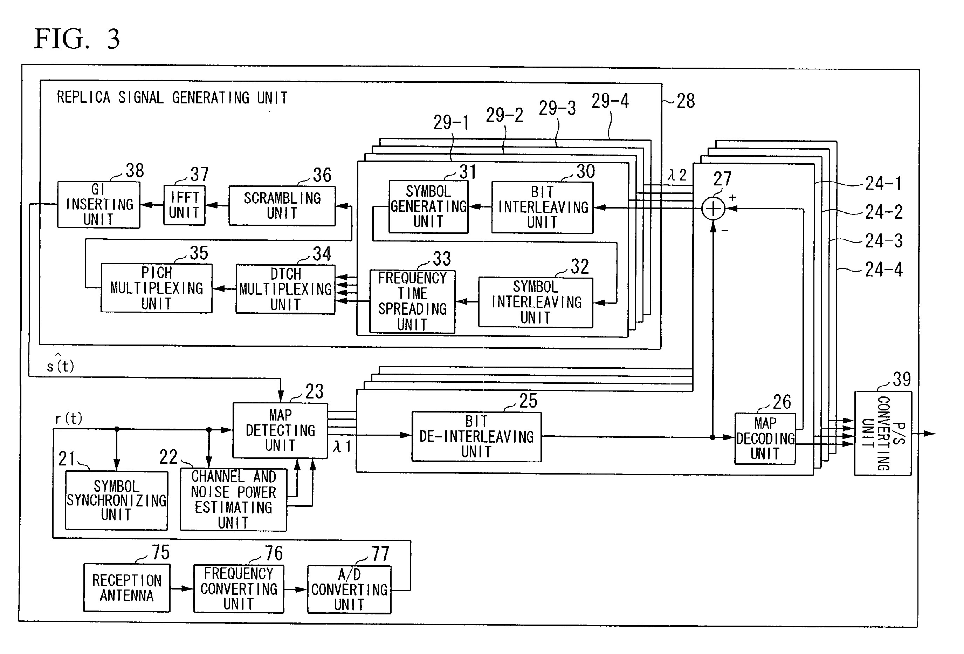

FIG. 3 is a schematic diagram showing a configuration of the wireless reception device according to the first embodiment of the present invention. The wireless reception device includes a symbol synchronizing unit 21, a channel and noise power estimating unit 22, a MAP detecting unit 23, every code MAP decoding unit 24-1 to 24-4, a replica signal generating unit 28, a P/S (Parallel / Serial) converting unit 39.

The replica signal generating unit 28 includes every code symbol generating units 29-1 to 29-4, a DTCH multiplexing unit 34, a PICH multiplexing unit 35, a scrambling unit 36, an IFFT unit 37, and a GI inserting unit 38. The replica signal generating unit 28 generates a replica signal which is the replica of the transmitted signal based on the received signal r(t). Specifically, the replica signal generating unit 28 generates the replica signal which is the replica of the transmitted signal based on the log likelihood ratio calculated by the MAP decoding unit 26.

In addition, the every code symbol generating units 29-1 to 29-4 includes a bit interleaving unit 30, a symbol generating unit 31, a symbol interleaving unit 32 and a frequency time spreading unit 33. In addition, the every code MAP decoding units 24-1 to 24-4 include a bit de-interleaving unit 25, a MAP decoding unit 26 and an adding unit 27.

The frequency converting unit 76 performs the frequency conversion process such that the received signal received by the reception antenna 75 is converted to the base band signal, the A/D (Analog / Digital) converting unit 77 performs the analog digital conversion process, the symbol synchronizing unit 21 performs the symbol synchronization as the digital received signal r(t). The symbol synchronizing unit 21 performs the symbol synchronization using the correlation of the guard interval GI and the effective signal interval, and after processes are performed based on the result.

Next, the channel estimation and noise power estimating unit 22 estimates the channel impulse response and the noise power estimation value using the pilot channel PICH. As the channel estimation method, the RLS (Recursive Least Square) algorism which generates the replica signal of the pilot channel PICH such that the square error of the absolute value becomes minimum may be used, or the method which calculates the correlation of the received signal and the replica signal of the pilot channel PICH may be used. However, the method is not limited these methods.

As the method of the noise power estimation method, the method which generates the replica of the pilot channel PICH based on the received the pilot channel PICH using the estimated the channel impulse response and calculates the difference thereof may be used. However, the method is not limited this method.

The channel and noise power estimating unit 22 supplies the channel impulse response and the noise power estimation value, to the MAP detecting unit 23 (use the maximum a posteriori probability detector, the maximum a posteriori probability (MAP) decoding method (described below)), and the information is used for calculating the log likelihood ratio for every bits.

The MAP detecting unit 23 supplies the log likelihood ratio for every bits using the received signal, the channel impulse response and the noise power estimation value when the process is a first process. The log likelihood ratio is the value which indicates that whether received bit probably seems zero or one, and is calculated based on the bit error rate of the channel. In FIG. 3, each every code MAP decoding units 24-1 to 24-4 is supplied four signals, and supplies the log likelihood ratio of bits which are assigned to each different spreading code. If the code multiplexing using the $C_{mux}$ number of different spreading codes is performed, the $C_{mux}$ number of outputs are supplied to each every code MAP decoding units 24-1 to 24-$C_{mux}$.

If the iterative process is performed, the log likelihood ratio is output using the received signal, the replica signal which is obtained by the demodulation process, the channel impulse response and the noise power estimation.

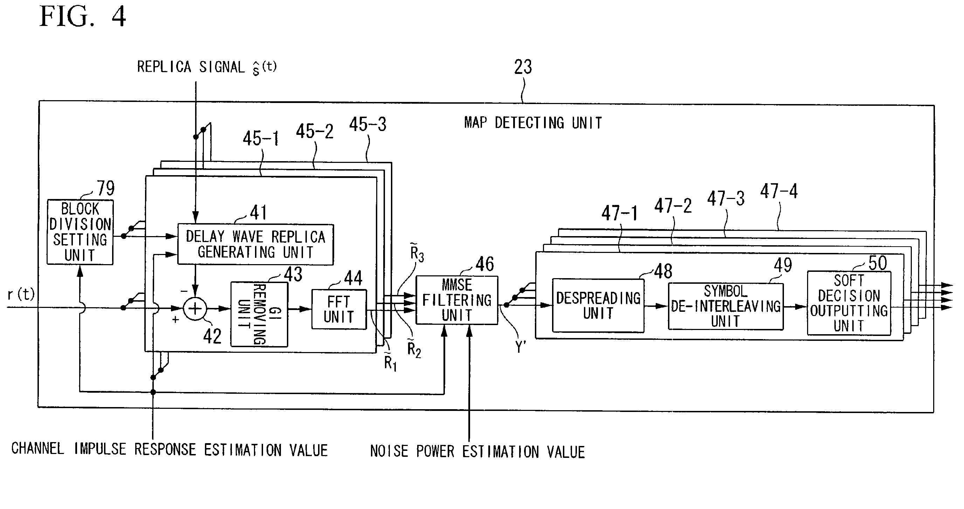

Next, in the every code MAP decoding units 24-1 to 24-4, the bit de-interleaving unit 25 performs the de-interleaving process to the input signal for every codes. The de-interleaving process is inverse process of the interleaving process, replace the original order which was replaced by the interleaving process. The MAP decoding unit 26 performs the MAP decoding process to the output of the bit de-interleaving unit 25. Specifically, the MAP decoding unit 26 performs the error correction decoding based on the result which the soft decision is performed by the soft decision outputting unit 50 (FIG. 4) of the MAP detecting unit 23, and calculates the log likelihood ratio for every bits. The MAP decoding process is the method that the hard decision is not performed when the normal error correction decoding (for example, the turbo decoding, the LDPC decoding, or the viterbi decoding) is performed, and outputs the soft decision result like the log likelihood ratio which includes the information bit and parity bit. In other words, the hard decision only decides the received signal is zero or one. In contrast to this , the soft decision decides based on the information (the soft decision information) which indicates the received signal is certain to what degree.

Next, the adding unit 27 calculates the difference λ2 between the input of the MAP decoding unit 26 and the output of the MAP decoding unit 26, and outputs the result to the replica signal generating unit 28.

The input signal of the replica signal generating unit 28 is supplied to the bit interleaving unit 30. The bit interleaving unit 30 replaces λ2 for every bit, and outputs it. The symbol generating unit 31 performs the symbol modulation process using same modulation system (for example, BPSK, QPSK, 16QAM, or 64QAM) of the wireless transmission device to the output of the bit interleaving unit 30 based on the size of λ2. The symbol interleaving unit 32 replaces the order of the output of the symbol generating unit 31 for every symbols. The frequency time spreading unit 33 spreads the output of the symbol interleaving unit 32 using the spreading code (the channelization code).

The wireless reception device includes the code multiplexing number $C_{mux}$ ($C_{mux}$ is a natural number which is equal to 1 or greater than 1) of the every code MAP decoding unit and the every code symbol generating unit. In this case, $C_{mux}$=4. The every code symbol generating units 29-1 to 29-4 output signals which were spread by different spreading code, and the DTCH multiplexing unit 34 multiplexes (adding process) them. Next, the PICH multiplexing unit 35 inserts (time multiplexing) the pilot channel for using the channel estimation into the predetermined position. Next, the scrambling unit 36 performs the scrambling using the scrambling code which is peculiar to the base station device, the IFFT unit 37 performs the frequency time conversion, the GI inserting unit 38 inserts the guard interval GI, The MAP detecting unit 23 performs the iterative signal process using the signal, and supplies it to the MAP detecting unit 23.

After the iterative decoding process is performed predetermined times, the MAP decoding unit 26 outputs the signal to the P/S converting unit 39, the P/S converting unit 39 performs the parallel serial conversion, and outputs it as the demodulation result to the MAC unit (not shown).

FIG. 4 is a diagram showing a configuration of a MAP detecting unit 23 (FIG. 3) according to the first embodiment of the present invention. The MAP detecting unit 23 includes soft canceller block units 45-1 to 45-3 (also called a delay wave removing unit), a MMSE (Minimum-Mean Square-Error) filtering unit 46 (also called a combining unit), every code log likelihood ratio outputting units 47-1 to 47-4 and a block division setting unit 79.

The block division setting unit 79 sets the block division setting value based on the arrived delay wave groups. Specifically, the block division setting unit 79 sets the block division setting values which are predetermined time periods for every soft canceller block units 45-1 to 45-3 based on the channel impulse response estimation value which is the channel estimation value estimated from the received signal r(t), and outputs the block division setting values of each soft canceller block units 45-1 to 45-3 to each soft canceller block units 45-1 to 45-3.

Each soft canceller block units 45-1 to 45-3 include a delay wave replica generating unit 41, an adding unit 42, a GI removing unit 43 and an FFT unit 44. The soft canceller block units 45-1 to 45-3 removes the delay wave for every time periods from the received signal r(t) using the block division setting value set by the block division setting unit 79 and the replica signal generated by the replica signal generating unit 28, and outputs it to the MMSE filtering unit 46. The delay wave replica generating unit 41 generates the replica of the delay wave element (include first arrival wave, the non-predetermined signal element) which is not included the predetermined time periods in the received signal based on the channel impulse response estimation value which is the channel estimation value estimated from the received signal r(t), the replica signal s^(t) generated by the replica signal generating unit 28 (FIG. 3) and the predetermined time periods of every soft canceller block units set by the block division setting unit 79. The adding unit 42 subtracts the replica of the delay wave generated by the delay wave replica generating unit 41 from the received signal r(t).

Each every code log likelihood ratio outputting units 47-1 to 47-4 includes a despreading unit 48, a symbol de-interleaving unit 49 and a soft decision outputting unit 50 (also called a determining unit).

The adding unit 42 calculates the difference between the received signal r(t) input to the MAP detecting unit 23 and the output of the delay wave replica generating unit 41, and outputs the result to the GI removing unit 43. The GI removing unit 43 removes the guard interval GI, and outputs the signal to the FFT unit 44. The FFT unit 44 performs the time frequency conversion to the input signal, and obtains the signals $R^{\sim}_1$ to $R^{\sim}_3$. The MAP detecting unit 23 includes B (B is a natural number which is greater than 1) blocks of the soft canceller block units. In addition, I is a natural number, and $1 \leq i \leq B$.

Next, the MMSE filtering unit 46 combines the signals which were removed the delay wave for every time periods by the soft canceller block units 45-1 to 45-3. Specifically, the MMSE filtering unit 46 performs the MMSE filtering process using the output $R^{\sim}_1$ to $R^{\sim}_3$, the channel impulse response estimation value and the noise power estimation value, and obtains the signal Y'. In addition, the block division error which is calculated based on the replica signal may be used when the MMSE filtering process is performed.

The $C_{mux}$ ($C_{mux}=4$) number of the every code log likelihood ratio outputting units 47-1 to 47-4 outputs the log likelihood ratio of every bits of each codes using the signal Y'. The despreading unit 48 performs the despreading process using each despreading code. The symbol de-interleaving unit 49 replaces to the output of the despreading unit 48 for every symbols. The soft decision outputting unit 50 performs the soft decision for the signal synchronized by the MMSE filtering unit 46. The soft decision outputting unit 50 outputs the log likelihood ratio $\lambda 1$ of every bit which correspond to the out put of the symbol interleaving as the soft decision result.

The soft decision outputting unit 50 performs the soft decision for the signal combined by the MMSE filtering unit 46. Specifically, the soft decision outputting unit 50 calculates the log likelihood ratio $\lambda 1$ using the formula (1) to the formula (3) described below. In other words, if the output of n-th symbol of the symbol de-interleaving unit 49 is Zn, the soft decision result $\lambda 1$ of the QPSK modulation is indicated the formula (1) and the formula (2) described below.

$$\lambda 1(b0) = \frac{2R[Zn]}{\sqrt{2}[1 - \mu(n)]} \quad \cdots \quad (1)$$

$$\lambda1(b1) = \frac{2\operatorname{Im}[Zn]}{\sqrt{2}[1-\mu(n)]} \quad \cdots \quad (2)$$

R[] indicates the real part in the [], and Im[] indicates the imaginary part in the []. $\mu(n)$ indicates the standard symbol (the amplitude of the pilot signal) of the n symbol. In addition, the output Zn is indicated as the formula (3) described below.

$$Zn = \frac{1}{\sqrt{2}}(b0 + jb1) \quad \cdots \quad (3)$$

In this case the QPSK is used, however, in other modulation system, it is able to similarly calculate the soft decision result (log likelihood ratio) $\lambda1$ for every bits.

In FIG. 3 and FIG. 4, both of the bit interleaving unit 30 and the bit de-interleaving unit 25, the symbol interleaving unit 32 and the symbol de-interleaving unit 49 are provided. However, one of them may be provided. In other words, the bit interleaving unit 30 and bit de-interleaving unit 25 may be only provided, or the symbol interleaving unit 32 and the symbol de-interleaving unit 49 may b only provided. In addition, all of the bit interleaving unit 30, the bit de-interleaving unit 25, the symbol interleaving unit 32 and the symbol de-interleaving unit 49 may not be provided.

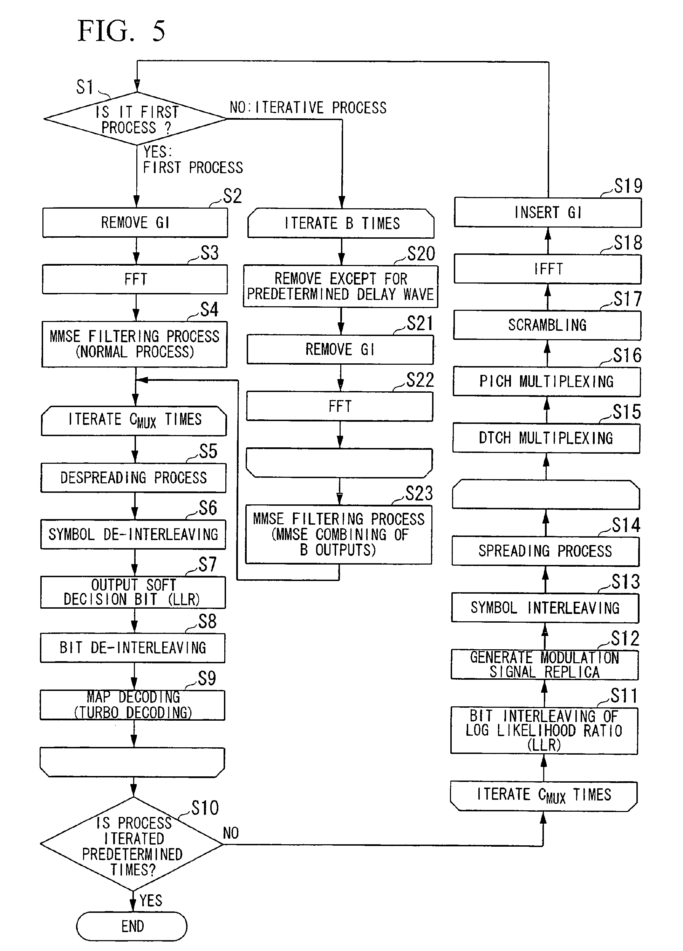

FIG. 5 is a flowchart showing an operation of the wireless reception device according to the first embodiment of the present invention. The MAP detecting unit 23 determines whether or not the process is a first process (step S1). If it is determined that the process is the first process in the step S1, the GI removing unit 43 removes the guard interval GI from the received signal (step S2). Then, the FFT unit 44 performs the FFT processing (time frequency conversion process) (step S3). Next, the MMSE filtering unit 46 performs the normal MMSE filtering process (step S4).

Then, the despreading unit 48 performs the despreading process (step S5). Next, the symbol de-interleaving unit 49 performs the symbol de-interleaving process (step S6). Then, the soft decision outputting unit 50 performs the outputting process of the soft decision bit (step S7). Next, the bit de-interleaving unit 25 performs the bit de-interleaving process (step S8). Then, the MAP decoding unit 26 performs the MAP decoding process (step S9). After the processes of the steps S5 to S9 are iterated $C_{mux}$ times, it is determined whether or not the decoding process is iterated the predetermined times (whether or not the every code MAP decoding unit outputs $\lambda2$ predetermined number) (step S10). As explained in FIG. 3, the process may be performed in $C_{mux}$ number of circuits which are provided in parallel. In addition, the MMSE filtering process of first time is described bellow.

If it is determined that the processes of the steps S5 to S9 are not iterated predetermined times, the bit interleaving unit 30 performs the bit interleaving to the log likelihood ratio using the demodulation result $\lambda2$ for $C_{mux}$ codes (step S11). Then, the symbol generating unit 31 generates a demodulation signal replica (step S12). Next, the symbol interleaving unit 32 performs the symbol interleaving (step S13). Then, the frequency time spreading unit 33 performs the spreading process using the predetermined spreading code (step S14).

After the processes of the steps S11 to S14 are iterated $C_{mux}$ times, the DTCH multiplexing unit 34 performs the DTCH multiplexing (step S15). Then, the PICH multiplexing unit 35 performs the PICH multiplexing (step S16). Then, the scrambling unit 36 performs the scrambling process (step S17). Then, the IFFT unit 37 performs the IFFT process (step S18). Next, the GI inserting unit 38 inserts the guard interval GI (step S19). The signal inserted the guard interval GI in the step S19 is used as the replica signal, and the signal is used in the iterated demodulation process.

If it is determined that the process is iterative process in the step S1 (in other words, if it is determined that the process is not a first process), the soft canceller block units 45-1 to 45-3 removes the signals except for the predetermined delay signal (include the direct wave) for every blocks (step S20). Then ,the GI removing unit 43 performs the GI removing process (step S21). Next, the FFT unit 44 performs the FFT process (step S22). After the processes of the steps S20 to S22 are performed for B (B is a natural number) blocks, the MMSE filtering unit 46 combines the output signals from the B blocks by the MMSE filter according to the minimum mean square error standard. In other words, the MMSE filtering process is performed (step S23). In addition, after the step S23, the step S5 is performed, and the process which is same as the first process is performed.

Until the process is iterated predetermined times in the step S10, the processes of the steps S1 to S9, S11 to S23 are iterated.

Next, the process of the soft canceller block units 45-1 to 45-3 is specifically described. The operations of the replica generating unit 41 and the adding unit 42 of the i-th soft canceller block unit 45-i are described.

First, in the soft canceller block unit 45-i, the delay wave replica generating unit 41 generates the $h_i$, and subtracts the result of the convolution calculation of $h_i$ and the replica signal s^(t) from the received signal r(t), and supplies it as the output of the adding unit 42.

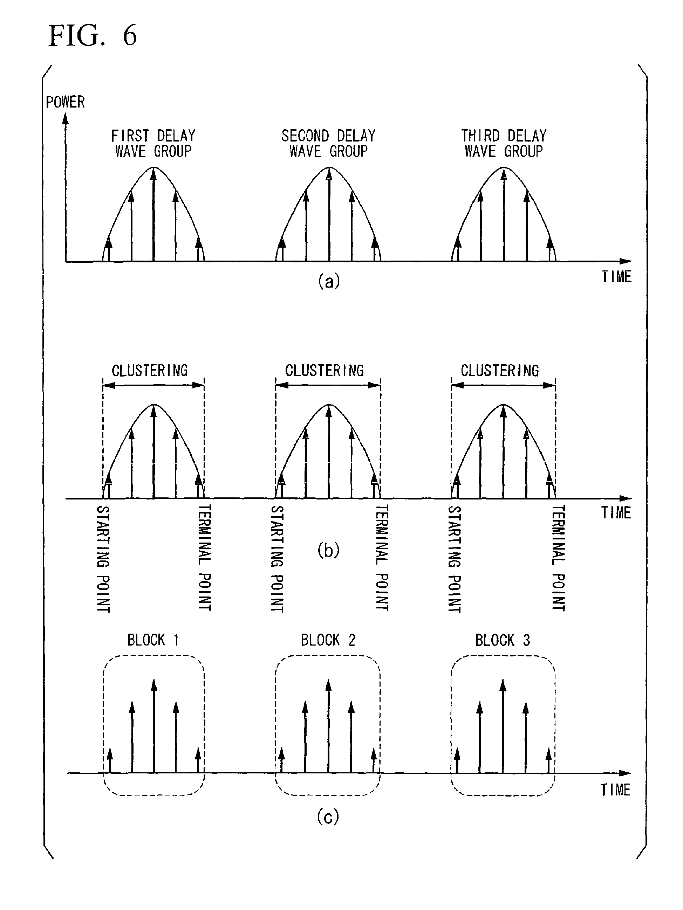

FIG. 6(a) is a diagram showing channel impulse response estimation values according to the first embodiment of the present invention. In this case, the channel impulse response estimation value obtained the channel and noise power estimating unit 22 is obtained. In FIG. 6(a), three delay wave groups (the first delay wave group, the second delay wave group, and the third delay wave group) are arrived. In addition, the horizontal axis is a time, and the vertical axis is a received power.

The block division setting unit 79 sets the predetermined time periods which are used in the each soft canceller block units 45-1 to 45-3 based on the channel impulse response estimation value obtained in the channel and noise power estimating unit 22. Specifically, as shown in FIG. 6(b), the starting point and the terminal point of each arrived delay waves are selected. Then, each delay wave groups are regarded as one cluster based on the starting point and the terminal point of the selected each delay wave groups, and are performed a clustering. Finally, the each clusters which are performed the clustering, as shown in FIG. 6(c), are set as the predetermined time periods (block) which are used in each soft canceller block units 45-1 to 45-3, and the block division setting values which were set are input to each soft canceller block units 45-1 to 45-3. In addition, the cluster is that the starting point and the terminal point of the delay wave group are identified, and are the delay wave which are included between the starting point and the terminal point are grouped. In addition, the block is a thing which is divided the predetermined time periods for performing the block dividing from the recognized cluster.

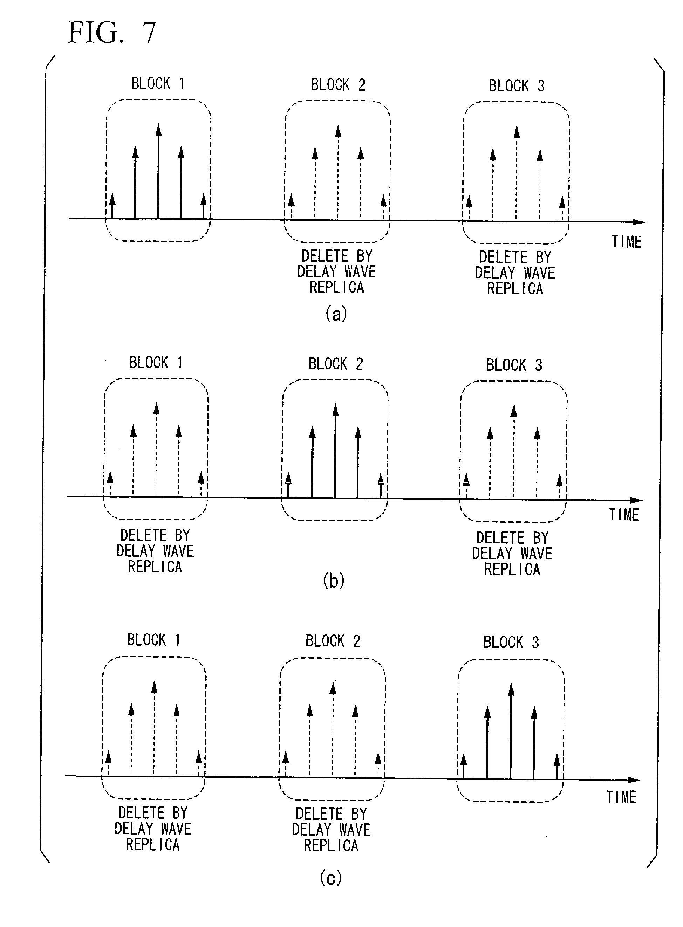

FIG. 7(a) is a diagram showing channel impulse response estimation value in a soft canceller block unit 45-1 according to the first embodiment of the present invention.
As shown in FIG. 7(a), if the predetermined delay wave (the predetermined wave which include the direct wave) of the soft canceller block unit 45-1 is the path (arrival wave) which is shown as solid line in the block 1, the soft canceller block unit 45-1 defines the channel impulse response value which is comprised by the path which is shown as dotted line in the block 2 and block 3 as the $h_1(t)$, the delay wave replica generating unit 41 generates it. The output of the delay wave replica generating unit 41 is the convolution calculation result of the $h_1(t)$ and the replica signal s^(t), and the output of the adding unit 42 is the value which is subtracted the convolution calculation result of $h_1(t)$ and s^(t) from the received signal r(t). In other words, if the replica is generated correctly, the output of the adding unit 42 is the signal which was received via the channel expressed $(h(t)-h_1(t))$. Therefore, the path of the block 1 received via the channel which is shown as the solid line in FIG. 7(a) is the output of the adding unit 42.

FIG. 7(b) is a diagram showing channel impulse response estimation value in a soft canceller block unit 45-2 according to the first embodiment of the present invention. As shown in FIG. 7(b), if the predetermined delay wave (the predetermined wave) of the soft canceller block unit 45-2 is the path which is shown as solid line in the block 2, the soft canceller block unit 45-2 defines the channel impulse response value which is comprised by the path which is shown as dotted line in the block 1 and block 3 as the $h_2(t)$, the delay wave replica generating unit 41 generates it. The output of the delay wave replica generating unit 41 is the convolution calculation result of the $h_2(t)$ and the replica signal s^(t), and the output of the adding unit 42 is the value which is subtracted the convolution calculation result of $h_2(t)$ and s^(t) from the received signal r(t). In other words, if the replica is generated correctly, the output of the adding unit 42 is the signal which was received via the channel expressed $(h(t)-h_2(t))$. Therefore, the path of the block 2 received via the channel which is shown as the solid line in FIG. 3 is the output of the adding unit 42.

FIG. 7(c) is a diagram showing channel impulse response estimation value in a soft canceller block unit 45-3 according to the first embodiment of the present invention.
As shown in FIG. 7(b), if the predetermined delay wave (the predetermined wave) of the soft canceller block unit 45-3 is the path which is shown as solid line in the block 3, the soft canceller block unit 45-3 defines the channel impulse response value which is comprised by the path which is shown as dotted line in the block 1 and block 2 as the $h_3(t)$, the delay wave replica generating unit 41 generates it. The output of the delay wave replica generating unit 41 is the convolution calculation result of the $h_3(t)$ and the replica signal s^(t), and the output of the adding unit 42 is the value which is subtracted the convolution calculation result of $h_3(t)$ and s^(t) from the received signal r(t). In other words, if the replica is generated correctly, the output of the adding unit 42 is the signal which was received via the channel expressed $(h(t)-h_3(t))$. Therefore, the path of the block 3 received via the channel which is shown as the solid line in FIG. 4 is the output of the adding unit 42.

In the explanations of FIG. 7(a) to FIG. 7(c), the clustering is performed based on the starting point and the terminal point of the delay wave which is recognized by the block division setting unit 79, and each clusters are set as the predetermined time periods which are used by the soft canceller block units 45-1 to 45-3. As other method, further small block for each clusters may be set based on the recognized path number.

In addition, the soft canceller block units 45-1 to 45-3 sets the predetermined time periods for each clusters based on the time of the recognized delay wave. In other words, the arrival time of the delay wave is divided into B number, and it is determined which soft canceller block unit processes based on the time period the delay wave arrives. In other words, the replica signal which are generated and subtracted for every soft canceller block units may be change based on the time of the identified delay wave. For example, the block dividing for each clusters is performed based on the guard interval length.

In addition, the soft canceller block units 45-1 to 45-3 may be set the predetermined time periods for each clusters based on the received power of the identified delay wave. In other words, all the received signals are divided into B number in order of the arrival time such that the received signals which are included in the delay wave become almost constant, and it is determined whether soft canceller block unit performs based on this. In other words, the replica signal which are generated and subtracted for every soft canceller block units may be change based on the received power of the recognized delay wave.

Next, the operations of the MMSE filtering unit 46 which is shown in FIG. 4, and the step S4 and step S23 are described.

First, the operation of the MMSE filtering unit 46 of the first process is described. If the received signal is expressed in the frequency region, the received signal R is indicated as the formula (4) described below.

$$R = \hat{H} S + N \quad \cdots \quad (4)$$

H^ indicates the transfer function of the estimated channel, if the delay wave which is shorter than the guard interval GI only exists, is expressed as the diagonal matrix of Nc by Nc. In addition, Nc indicates the sub-carrier number of the spread- OFCDM. H^ is expressed as the formula (5) described below.

$$\hat{H} = \begin{pmatrix} \hat{H}_1 & & & 0 \\ & \hat{H}_2 & & \\ & & \ddots & \\ 0 & & & \hat{H}_{Nc} \end{pmatrix} \quad \cdots \quad (5)$$

S indicates the transmission symbol, as shown the formula (6) described below, is expressed as the Nc by 1 vector.

$$S^T = (S_1, S_2, \cdots, S_{Nc}) \quad \cdots \quad (6)$$

Similarly, the received signal R and the noise element N are expressed as Nc by 1 vector as shown the formula (7) and the formula (8) described below.

$$R^T = (R_1, R_2, \cdots, R_{Nc}) \quad \cdots \quad (7)$$

$$N^T = (N_1, N_2, \cdots, N_{Nc}) \quad \cdots \quad (8)$$

In the formula (6) to the formula (8), suffix T indicates that the matrix is the transposed matrix.

If such the received signal is received, the output Y of the MMSE filtering unit 46 is expressed as Nc by 1 vector shown as the formula (9) described below.

$$Y = WR \quad \cdots \quad (9)$$

The MMSE filtering unit 46 determines the MMSE filtering coefficient W based on the channel impulse response estimation value and the noise power estimation value. The MMSE filtering coefficient W is expressed as Nc by Nc diagonal matrix as shown the formula (10) described below.

$$W = \begin{pmatrix} W_1 & & & 0 \\ & W_2 & & \\ & & \ddots & \\ 0 & & & W_{Nc} \end{pmatrix} \quad \cdots \quad (10)$$

During the spreading along a frequency, each elements of the MMSE filtering coefficient Wm are expressed as the formula (11) described below.

$$W_m = \frac{\hat{H}_m^H}{\hat{H}_m^H \hat{H}_m + (C_{max} - 1)\hat{H}_m^H \hat{H}_m + \hat{\sigma}_N^2} = \frac{\hat{H}_m^H}{C_{max} \hat{H}_m^H \hat{H}_m + \hat{\sigma}_N^2} \cdots (11)$$

In addition, in the aforementioned formula,

$$(C_{max} - 1)\hat{H}_m^H \hat{H}_m$$

is an interference component from other code during the code multiplexing,

$$\hat{\sigma}_N^2$$

indicates the estimation value of the noise power. In addition, the suffix H indicates that the matrix is the Hamiltonian (conjugate transposed).

If the orthogonality between the codes during the spreading along a time is maintained, each elements of the MMSE filtering coefficient $W_m$ is expressed as the formula (12) described below.

$$W_m = \frac{\hat{H}_m^H}{\hat{H}_m^H \hat{H}_m + \sigma_N^2} \quad \cdots \quad (12)$$

Next, the operation of the MMSE filtering unit of iterative process is described. The replica signal $r^\wedge_i$ which is used in the i-th soft canceller block unit 45-i during the iterated demodulation process is expressed as the formula (13) described below.

$$\hat{r}_i = \left( \hat{h} - \hat{h}_i \right) \otimes \hat{s} \quad \cdots \quad (13)$$

$h^\wedge_i$ is a delay profile that the delay wave for processing in the i-th soft canceller block unit 45-i is only abstracted. $s^\wedge(t)$ is a replica signal which is calculated based on the log likelihood ratio $\lambda 2$ obtained by the previous MAP decoding.

$\otimes$

indicates the convolution calculation. Therefore, the output of the soft canceller block unit 45-i (in other words, the output $R^-_i$ of the i-th soft canceller block unit 45 in FIG. 4) is expressed as the formula (14) described below.

$$\tilde{R}_i = R - \hat{R}_i = \left[ \hat{H}_1 \hat{H}_2 \cdots \hat{H}_B \right] \left[ \hat{S}^T \hat{S}^T \cdots \hat{S}^T \right]^T + \Delta = \hat{H}' \hat{S}' + \Delta = \left[ \tilde{R}_1^T \tilde{R}_2^T \cdots \tilde{R}_B^T \right]^T \quad \cdots \quad (14)$$

$\Delta$ includes the error signal and the thermal noise element stem from the uncertainty of the replica. The output Y' of the MMSE filtering unit 46 is expressed as the formula (15).

$$Y' = W' \tilde{R}' = \left[ W'_1 W'_2 \cdots W'_B \right] \cdot \left[ \tilde{R}_1^T \tilde{R}_2^T \cdots \tilde{R}_B^T \right]^T \quad \cdots \quad (15)$$

If the replica signal is generated correctly, the $\Delta$ does not include the element stem from the replica error, and the thermal noise element is only included, the sub-matrix of the MMSE filtering coefficient is expressed as the diagonal matrix shown in the formula (16).

$$W'_i = \begin{bmatrix} W'_{i,1} & & & 0 \\ & W'_{i,2} & & \\ & & \ddots & \\ 0 & & & W'_{i,Nc} \end{bmatrix} \quad \cdots \quad (16)$$

The input signal to the MMSE filtering unit 46 has low frequency selectivity described below, and the state becomes approximately the flat fading. Therefore, if the multi code interference of the code multiplexing does not exist, each element is expressed as the formula (17) described below.

$$W'_{i,m} = \frac{\hat{H}^H_{i,m}}{\displaystyle\sum_{i'=1}^{B} \hat{H}^H_{i',m} \hat{H}_{i',m} + \hat{\sigma}^2_N} \qquad \cdots \quad (17)$$

$H\hat{}_{i',m}$ is a transfer function of the m-th channel of the i'-th soft canceller block unit. $H\hat{}_{i',m}{}^H$ is the Hamiltonian of the $H\hat{}_{i',m}$.

In the formula (17), the first item of the denominator may be multiplexed the $C_{mux}$. In other words, the input signal to the MMSE filtering unit 46 of the iterative process may be applied the formula (17') described below.

$$W_{i,m} = \frac{\hat{H}^H_{i,m}}{\displaystyle C_{mux}\sum_{i'=1}^{B} \hat{H}^H_{i',m} \hat{H}_{i',m} + \hat{\sigma}^2_N} \qquad \cdots \quad (17')$$

In the formulas (17) and (17'), the noise power estimation value $\sigma_N{}^{\wedge 2}$ may be calculated based on the replica signal output by the replica signal generating unit 28 in FIG. 3, the channel impulse response estimation value estimated by the channel and noise power estimating unit 22, and the received signal. For example, the value which is subtracted the result convoluted of the replica signal and the channel impulse response estimation value from the received signal is used as the noise power estimation value.

As explained above, by performing the iterative process, the delay wave which is over the guard interval GI is removed, and the affection of the multi code interference is also removed.

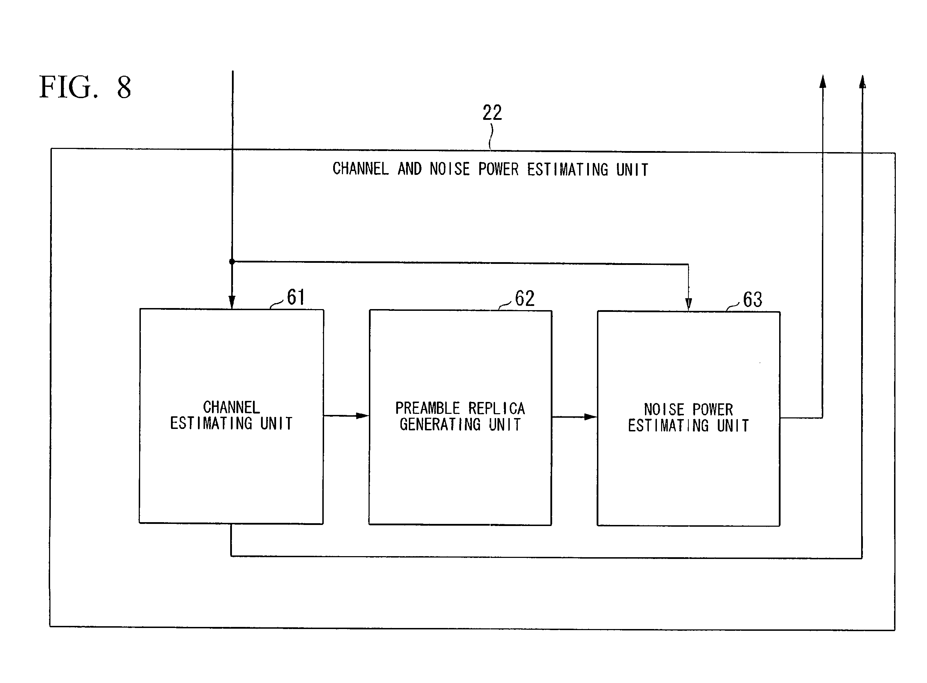

FIG. 8 is a diagram showing a channel and noise power estimating unit 22 (FIG. 3)according to the first embodiment of the present invention. The channel and noise power estimating unit 22 includes a channel estimating unit 61, a preamble replica generating unit 62, and a noise power estimating unit 63.

The channel estimating unit 61 estimates the channel impulse response using the pilot channel PICH which is included in the received signal. The preamble replica generating unit 62 generates the replica signal of the pilot channel PICH using the channel impulse response estimation value calculated by the channel estimating unit 61 and the waveform of the pilot channel PICH which is already known. The noise power estimating unit 63 estimates the noise power by calculating the difference between the PICH portion which is included in the received signal and the replica signal of the pilot channel PICH output by the preamble replica generating unit 62.

As the channel estimation method in the channel estimating unit 61, various method (for example, the method which calculates based on the minimum mean square error standard using the RLS algorism, the method which uses frequency correlation) may be used.

According to the wireless reception device of the first embodiment, the delay wave replica generating unit 41 removes the delay wave for every time periods from the received signal r(t) using the replica signal generated by the replica signal generating unit 28. Then , the MMSE filtering unit 46 combines the signal which is removed the delay wave for every predetermined time periods. Then, the soft decision outputting unit 50 performs the soft decision to the combined signal. It is able to perform the FFT process to the signal which is removed the delay wave. In addition, it is able to perform the despreading process to the signal which is decreased the frequency selectivity by removing the delay wave, and it is able to remove the multi code interference with the calculation amount which does not relate to the code number.

In the first embodiment, as the reception device, the canceller, the replica generation, the demodulation process, and the decoding process, which use the soft decision result from the received signal, are used. However, the canceller, the replica generation, demodulation process, and the decoding process may be use the hard decision result. In other words, the MAP detecting unit which includes the demodulation processing unit which demodulates (bit analyzing) the modulation signal like the QPSK or 16QAM from the received signal, and the soft decision outputting unit which outputs the log likelihood ratio, are used. However, the detecting unit which outputs the hard decision value may be used. In addition, the replica signal generating unit which generates the replica signal of the transmitted signal from the hard decision value may be used. In addition the soft canceller block unit which removes the delay wave based on the replica signal generated by the soft decision is used. However, the canceller unit which removes the delay wave based on the replica signal generated by the hard decision value from the received signal may be used. These are same to the embodiments described below.

In the first embodiment, when the outputs of the soft canceller block units are synchronized, the MMSE synchronizing unit which uses the linear synchronization. However, the ZF (Zero Forcing), or the MRC (Maximum Ratio Combining) may be used. In addition, the non-linear synchronization may be used.

In the first embodiment, each code is the unit of performing the error correction coding, however, the error correction coding may be performed for a plurality codes. In the first embodiment, the MC-CDM is used, the multi-carrier signal which is not performed the spreading process like the FORM (Orthogonal Frequency Division Multiplexing) may be used.

According to the first embodiment, if the ISI and the ICI which stem from the delay wave groups which are over the guard interval, and multi code interference which stem from the frequency selectivity of the channel exist, it is able to obtain a good characteristics.

(Second Embodiment)

In a second embodiment, the clustering is performed based on the starting point of the each delay wave group, and block is generated.

In the second embodiment, the configurations of the transmission device and the reception device are almost same as the first embodiment. Part of the process which is performed by the block division setting unit 79 of the MAP detecting unit 23 in FIG. 4 is different from the first embodiment.

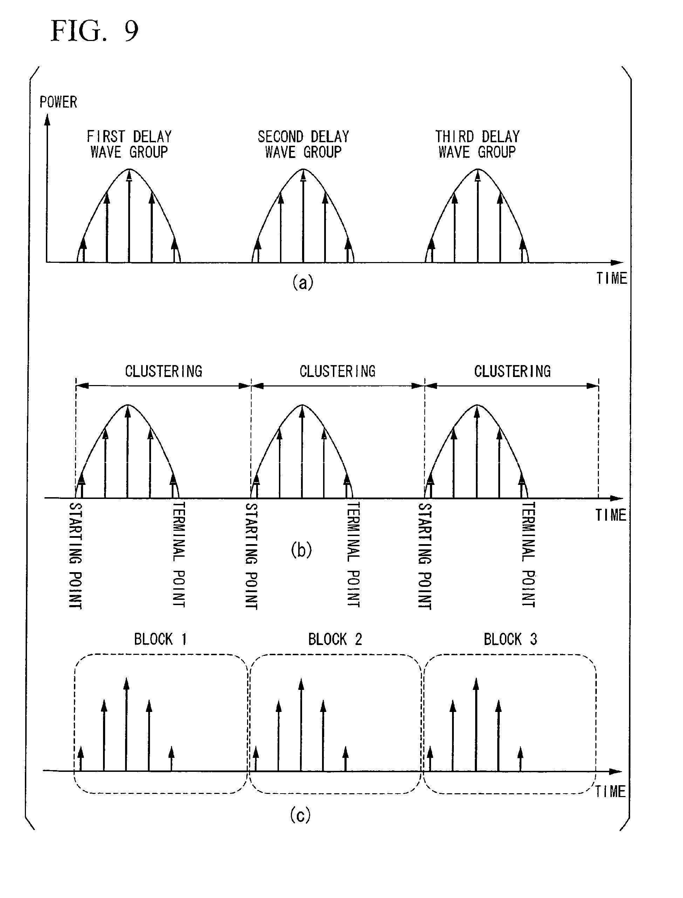

In the first embodiment, the block division setting unit 79 performs the clustering based on the starting point and the terminal point of the each delay wave groups. In the second embodiment, the clustering is performed based on the starting point of each delay wave group. For example, if three delay wave groups in FIG. 9(a) arrive, the clustering is performed sequentially based on the starting point of the delay wave group recognized as FIG. 9(b), and the predetermined time periods shown in FIG. 9(c) are set. In this case, the last cluster's terminal point may be set as the terminal point recognized for the cluster, or may be set as the terminal point which has the same length of other clusters.

According to the second embodiment, it is able to include the path which is not included in between the starting point and the terminal point of each delay wave groups into the cluster, and it is able to obtain the enough received power of the arrival pass. In addition, as similar to the first embodiment, it is able to divide further small blocks for the each clusters based on the recognized path number, the time and the received power.

(Third Embodiment)

In a third embodiment, for example, some cluster's power are smaller than other cluster's power.

In the third embodiment, the configurations of the transmission device and the reception device are almost same as the first embodiment. For example, the process which is performed by the block division setting unit 79 of the MAP detecting unit 23 in FIG. 4 when some cluster's power are smaller than other cluster's power is different from the first embodiment.

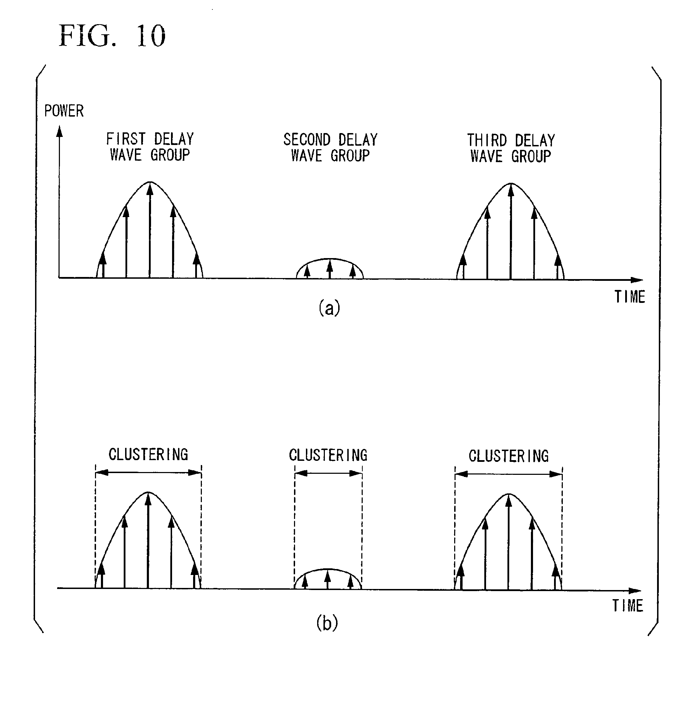

In three arrival delay wave groups in FIG. 10(a), the second delay wave group's received power is smaller than other delay wave's received power. In this case, using the similar process of the first embodiment, the starting point and the terminal point of the delay wave groups are selected, and the clustering is performed shown in FIG. 10(b), therefore, three clusters are obtained.

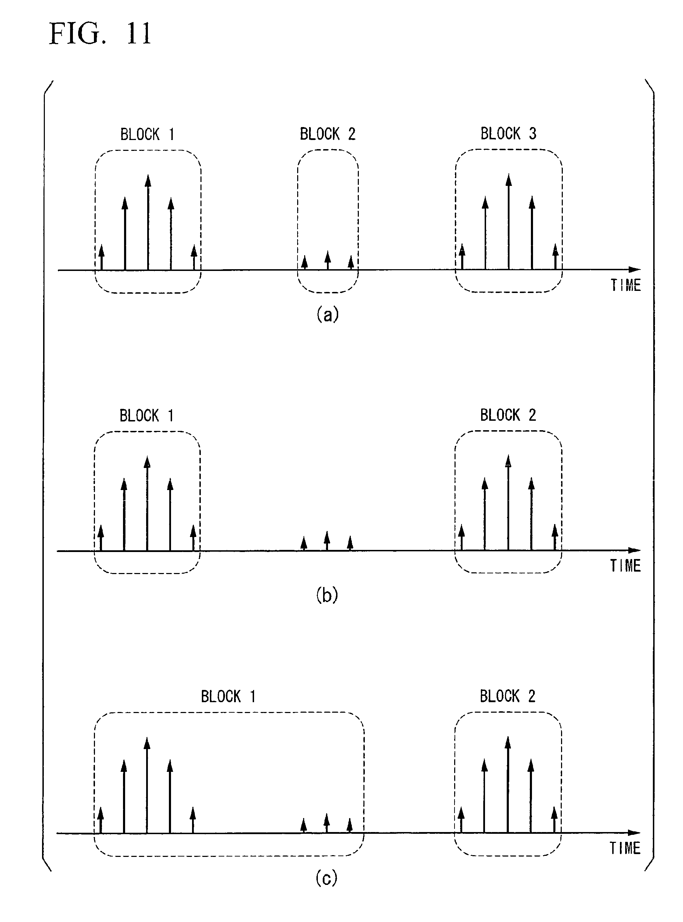

Next, the predetermined time period which is included in the block is set based on the obtained cluster. In contrast to this, in the first embodiment, all the obtained clusters shown in FIG. 11(a) are set as the block. In the second embodiment, as shown in FIG. 11(b), the cluster whose power is smaller than the predetermined power is not used as the block.

The cluster whose power is smaller than the predetermined power may be used as the same block of the other cluster shown in FIG. 11(c). In the aforementioned explanation, the standard which does not use as the block uses the power of each cluster, however, the path number which is included in the cluster or the cluster's time may be used as the standard. Similar to the first embodiment, it may be divided into further small blocks for each clusters based on the recognized path number, the time, and the received power. In addition, the configuration of the third embodiment may be applied to the configuration of the second embodiment.

According to the third embodiment, the cluster whose recognized power is smaller than the predetermined value is low accuracy than other cluster, it is able to decrease the affection.

(Fourth Embodiment)

In a fourth embodiment, the predetermined power which is the standard is used as the method which identifies the starting point and the terminal point to performing the clustering for the arrival delay wave groups.

In the fourth embodiment, the configurations of the transmission device and the reception device are almost same as the first embodiment. One part of the processes which are performed in the block division setting unit 79 of the MAP detecting unit 23 in FIG. 4 are different from the first embodiment.

The block division setting unit 79 sets the predetermined time periods (blocks) which are used in each soft canceller block units based on the channel impulse response estimation value obtained from the channel and noise power estimating unit 22.

To set the block, each arrival delay wave group's starting point and the terminal point are selected. In the fourth embodiment, the predetermined power which is the standard is used as the method which selects the starting point and the terminal point of the delay wave groups.

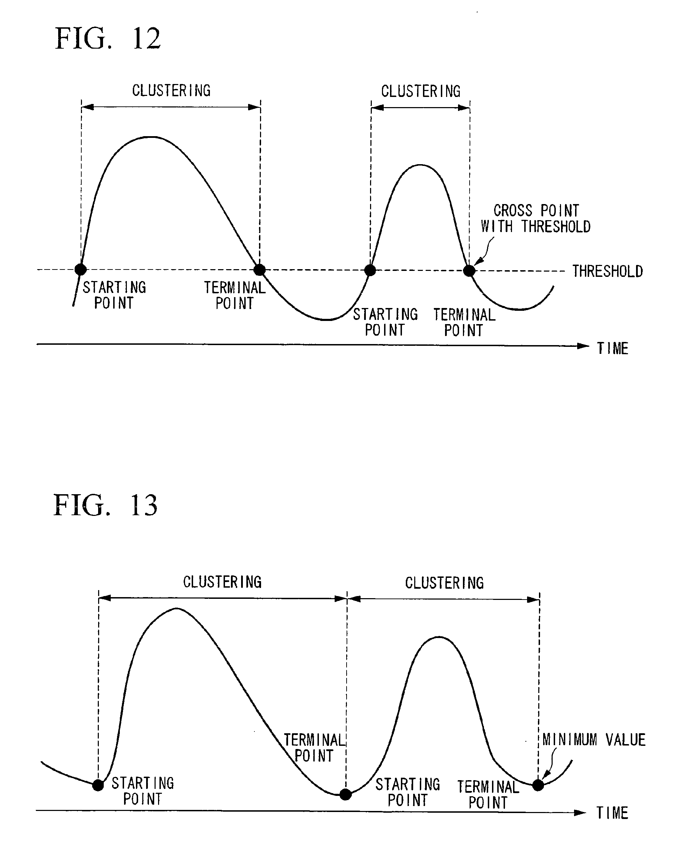

FIG. 12 indicates the method which selects the starting point and the terminal point of the delay wave groups which are used in the fourth embodiment. If the channel impulse response estimation value obtained from the channel and noise power estimating unit 22 is the waveform shown in FIG. 12, the predetermined power is used as the threshold, and the starting point and the terminal point of each delay wave groups are selected based on the cross point. Then, the clustering is performed based on the selected starting point and terminal point.

The noise power may be used as the predetermined power. The channel impulse response estimation value obtained from the channel and noise power estimating unit 22 may be removed the high-frequency element via low path filter for selecting the starting point and the terminal of the delay wave groups. In addition, the configuration of the fourth embodiment may be applied to the second embodiment or the third embodiment.

According to the fourth embodiment, it is able to decrease the affection of the noise which is included between the delay wave groups.


(Fifth Embodiment)

In a fifth embodiment, the minimum value of the channel impulse response estimation value which is the standard is used as the method which identifies the starting point and the terminal point to performing the clustering for the arrival delay wave groups.

In the fifth embodiment, the configurations of the transmission device and the reception device are almost same as the first embodiment. One part of the processes which are performed in the block division setting unit 79 of the MAP detecting unit 23 in FIG. 4 are different from the first embodiment.

The block division setting unit 79 sets the predetermined time periods (blocks) which are used in each soft canceller block units based on the channel impulse response estimation value obtained from the channel and noise power estimating unit 22. To set the block, each arrival delay wave group's starting point and the terminal point are selected. In the fourth embodiment, the minimum value of the channel impulse response estimation value which is the standard is used as the method which selects the starting point and the terminal point of the delay wave groups.

FIG. 13 indicates the method which selects the starting point and the terminal point of the delay wave groups which are used in the fourth embodiment. If the channel impulse response estimation value obtained from the channel and noise power estimating unit 22 is the waveform shown in FIG. 13, the minimum value of the waveform is selected, the starting point and the terminal point of each delay wave groups are selected based on the minimum value. To select the minimum value, for example the method which searches the point which changes from a minus to a plus of the slop of the tangent of the waveform of the channel impulse response estimation value, or the method which searches the contact point by moving the horizontal line for the waveform of the channel impulse response estimation value may be used. However, other method may be used. If the minimum value is used, the cluster's terminal point becomes the next cluster's starting point. Then, the clustering is performed based on the selected starting point and the terminal point.

In the aforementioned explanation, the starting point and the terminal point of each delay wave groups are minimum values. However, not only the minimum value but maximum value may be used as the standard. For example, the point between the minimum point and the next maximum point is set as the starting point, and the maximum point and the next minimum point are set as the terminal points. In this case, certain cluster's terminal point is not same as the next cluster's starting point. In addition, only maximum value may be used as the standard.

The channel impulse response estimation value obtained from the channel and noise power estimating unit 22 may be removed the high-frequency element via low path filter for selecting the starting point and the terminal of the delay wave groups. In addition, the configuration of the fifth embodiment may be applied to the second embodiment or the third embodiment.

According to the fifth embodiment, it is able to use the received signal power effectively, and the clustering is performed.

(Sixth Embodiment)

In a sixth embodiment, the tangent angle of the channel impulse response estimation value which is the standard is used as the method which identifies the starting point and the terminal point to performing the clustering for the arrival delay wave groups.

In the sixth embodiment, the configurations of the transmission device and the reception device are almost same as the first embodiment. One part of the processes which are performed in the block division setting unit 79 of the MAP detecting unit 23 in FIG. 4 are different from the first embodiment.

The block division setting unit 79 sets the predetermined time periods (blocks) which are used in each soft canceller block units based on the channel impulse response estimation value obtained from the channel and noise power estimating unit 22. To set the block, each arrival delay wave group's starting point and the terminal point are selected. In the sixth embodiment, the tangent angle of the channel impulse response estimation value which is the standard is used as the method which selects the starting point and the terminal point of the delay wave groups.

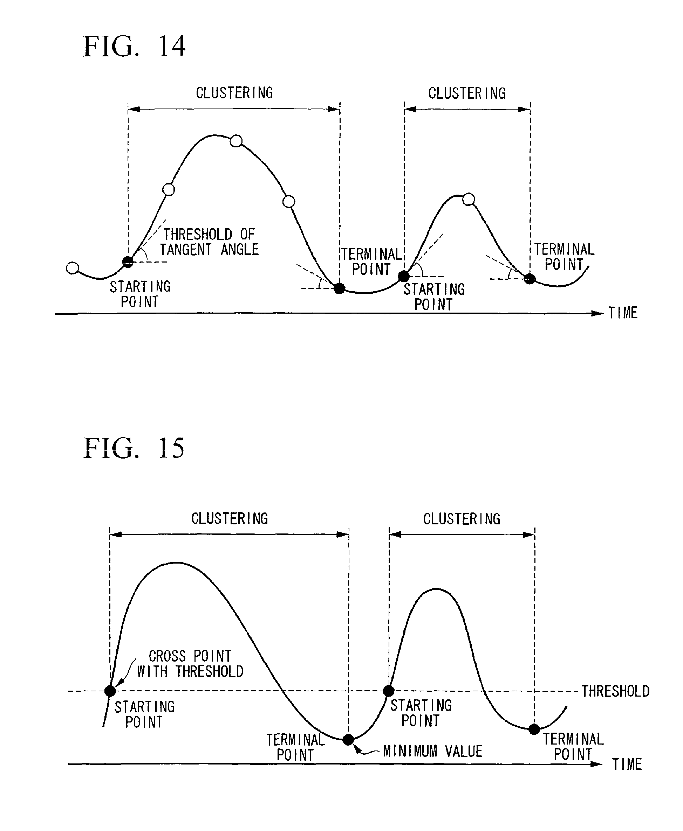

FIG. 14 indicates the method which selects the starting point and the terminal point of the delay wave groups which are used in the fourth embodiment. If the channel impulse response estimation value obtained from the channel and noise power estimating unit 22 is the waveform shown in FIG. 14, the predetermined tangent angle of the waveform is calculated for the waveform using the constant sampling interval, and the starting point and the terminal point of each delay wave groups are selected based on the tangent angle. The white circle and the black circle in FIG. 14 indicate the sampling points. For example, in the tangent angles obtained using the constant sampling interval, the sampling point whose tangent is right longitudinal and whose angle to the horizontal line is small is set as the starting point of the delay wave group, and the sample point whose tangent is left longitudinal and whose angle to the horizontal line is small is set as the terminal point, however, it is not limited this.

Then, the clustering is performed based on the selected starting point and terminal point.

According to the sixth embodiment, it is able to decrease a time and a calculation amount for selecting the starting point and the terminal point of the delay wave groups for performing the clustering. The channel impulse response estimation value obtained from the channel and noise power estimating unit 22 may be removed the high-frequency element via low path filter for selecting the starting point and the terminal of the delay wave groups. In addition, as the method for selecting the starting point and the terminal point of the delay wave groups, not only the tangent angle of the channel impulse response estimation value but the tangent slope may be used. In addition, the configuration of the sixth embodiment may be applied to the second embodiment or the third embodiment.

According to the sixth embodiment, it is able to decrease a time and a calculation amount for selecting the starting point and the terminal point of the delay wave groups for performing the clustering.

(Seventh Embodiment)

In a seventh embodiment, the methods which identify the starting point and the terminal point for performing the clustering to the arrival delay wave groups which are explained in the fourth to sixth embodiments are complexly used.

In the seventh embodiment, the configurations of the transmission device and the reception device are almost same as the first embodiment. One part of the processes which are performed in the block division setting unit 79 of the MAP detecting unit 23 in FIG. 4 are different from the first embodiment.

The block division setting unit 79 sets the predetermined time periods (blocks) which are used in each soft canceller block units based on the channel impulse response estimation value obtained from the channel and noise power estimating unit 22. To set the block, each arrival delay wave group's starting point and the terminal point are selected. In the seventh embodiment, the standards which are explained in the fourth to sixth embodiments are complexly used as the method which selects the starting point and the terminal point of the delay wave groups.

For example, FIG. 15 indicates that the starting point of each delay wave groups is set as the cross point with the predetermined power explained in the fourth embodiment, and the terminal point is set as the minimum point of the channel impulse response estimation value explained in the fifth embodiment. Then, the clustering is performed based on the selected starting point. FIG. 15 is one example, and not limited this. The channel impulse response estimation value obtained from the channel and noise power estimating unit 22 may be removed the high-frequency element via low path filter for selecting the starting point and the terminal of the delay wave groups. In addition, the configuration of the seventh embodiment may be applied to the second embodiment or the third embodiment.

According to the seventh embodiment, it is able to effectively perform the clustering to the channel characteristics between the transmission device and the reception device.

In addition, in first to seven embodiments, it is also possible to control the wireless transmission device and the wireless reception device by recording on a computer-readable recording medium a program which realizes the functions or a portion of the functions of each section of the wireless transmission device and each section of the wireless reception device, and by causing this program recorded on a recording medium to be read and executed by a computer system. Note that, here, 'computer system' includes the OS and hardware such as peripheral devices and the like.

Moreover, 'computer readable recording medium' refers to a storage medium such as a portable medium such as a flexible disc, a magneto-optical disc, ROM, or CD-ROM, or hard disc incorporated in a computer system or the like. Furthermore, 'computer readable recording medium' also includes devices that hold a program dynamically for short periods of time such as communication lines when the program is transmitted via a network such as the Internet or via a communication circuit such as a telephone line, and includes devices which hold a program for a fixed period of time such as the volatile memory incorporated in computer systems which form the servers and clients in the case of the communication lines or networks described above. The above described program may realize a portion of the above described functions or may realize the above described functions in combination with a program which has already been recorded on a computer system.

Embodiments of this invention have been described in detail above with reference made to the drawings, however, the specific structure of this invention is not limited to these embodiments and other designs and the like are also included insofar as they do not depart from the spirit or scope of this invention.

Industrial applicability

The present invention provides a reception device and a reception method which make it possible to decrease the calculation of demodulating the signal received from the transmission device.

**Claims**

1. A reception device comprising:

> a block division setting unit which sets a block division setting value based on an arrived delay wave group;
> a replica signal generating unit which generates a replica signal which is a replica of a transmitted signal based on a received signal;
> a delay wave removing unit which removes delay waves from the received signal for every time period, the removals being performed by using the block division setting value set by the block division setting unit and the replica signal;
> a combining unit which combines the signal from which the delay wave was removed, the combining being performed by the combining unit for every time period; and
> a determining unit which makes determination on the signal combined by the combining unit.

2. The reception device according to claim 1, wherein the block division setting unit performs clustering the delay wave groups based on a starting point and a terminal point of each delay wave group, and the block division setting unit sets the block division setting value based on the clustered delay wave group as a cluster.

3. The reception device according to claim 2, wherein the block division setting unit removes a cluster from a block, provided that the cluster is set at least one of power, path number and time being smaller than respective predetermined values.

4. The reception device according to claim 2, wherein the block division setting unit uses a cluster as the same block of other cluster, the cluster has at least one of power, path number and time being smaller than respective predetermined values.

5. The reception device according to claim 1, wherein the block division setting unit sets the starting point and the terminal point of the delay wave group based on a predetermined power.

6. The reception device according to claim 1, wherein the block division setting unit sets the starting point and the terminal point of the delay wave group based on an extremal value of a channel impulse response estimation value.

7. The reception device according to claim 1, wherein the block division setting unit sets the starting point and the terminal point of the delay wave group based on at least one of a tangential angle and a slope of a channel impulse response value.

8. The reception device according to claim 1, wherein the block division setting unit sets the starting point and the terminal point of the delay wave group based on a combination of a predetermined power, an absolute value of a channel impulse response estimation value, a tangential angle and a slope of the channel impulse response estimation value.

9. A reception device comprising:

a block division setting step which sets a block division setting value based on an arrived delay wave group;
a replica signal generating step which generates a replica signal which is a replica of a transmitted signal based on a received signal;
a delay wave removing step which removes delay waves from the received signal for every time period, the removals being performed by using the block division setting value set by the block division setting step and the replica signal;
a combining step which combines the signal which was removed the delay wave by the combining step for every time period; and
a determining step which makes determination on the signal combined by the combining step.

FIG. 1

FIG. 2

RECEIVED POWER

CODE MULTIPLEXING

$P_{PICH/DTCH}$

1

DTCH

DTCH

PICH

FRAME

TIME

FIG. 3

EP 2 173 046 A1

# FIG. 4

REPLICA SIGNAL $\hat{s}(t)$

23

MAP DETECTING UNIT

CHANNEL IMPULSE RESPONSE ESTIMATION VALUE     NOISE POWER ESTIMATION VALUE

EP 2 173 046 A1

## FIG. 5

S1
IS IT FIRST PROCESS ? — NO:ITERATIVE PROCESS

YES: FIRST PROCESS

S2 REMOVE GI

S3 FFT

S4 MMSE FILTERING PROCESS (NORMAL PROCESS)

ITERATE $C_{MUX}$ TIMES

S5 DESPREADING PROCESS

S6 SYMBOL DE-INTERLEAVING

S7 OUTPUT SOFT DECISION BIT (LLR)

S8 BIT DE-INTERLEAVING

S9 MAP DECODING (TURBO DECODING)

S10 IS PROCESS ITERATED PREDETERMINED TIMES? — NO

YES

END

ITERATE B TIMES

S20 REMOVE EXCEPT FOR PREDETERMINED DELAY WAVE

S21 REMOVE GI

S22 FFT

S23 MMSE FILTERING PROCESS (MMSE COMBINING OF B OUTPUTS)

S19 INSERT GI

S18 IFFT

S17 SCRAMBLING

S16 PICH MULTIPLEXING

S15 DTCH MULTIPLEXING

S14 SPREADING PROCESS

S13 SYMBOL INTERLEAVING

S12 GENERATE MODULATION SIGNAL REPLICA

S11 BIT INTERLEAVING OF LOG LIKELIHOOD RATIO (LLR)

ITERATE $C_{MUX}$ TIMES

# FIG. 6

(a)

(b)

(c)

FIG. 7

BLOCK 1      BLOCK 2      BLOCK 3

TIME

DELETE BY
DELAY WAVE
REPLICA

DELETE BY
DELAY WAVE
REPLICA

(a)

BLOCK 1      BLOCK 2      BLOCK 3

TIME

DELETE BY
DELAY WAVE
REPLICA

DELETE BY
DELAY WAVE
REPLICA

(b)

BLOCK 1      BLOCK 2      BLOCK 3

TIME

DELETE BY
DELAY WAVE
REPLICA

DELETE BY
DELAY WAVE
REPLICA

(c)

FIG. 8

CHANNEL AND NOISE POWER ESTIMATING UNIT — 22

CHANNEL
ESTIMATING UNIT — 61

PREAMBLE REPLICA
GENERATING UNIT — 62

NOISE POWER
ESTIMATING UNIT — 63

# FIG. 9

POWER

FIRST DELAY WAVE GROUP    SECOND DELAY WAVE GROUP    THIRD DELAY WAVE GROUP

TIME

(a)

CLUSTERING    CLUSTERING    CLUSTERING

STARTING POINT    TERMINAL POINT    STARTING POINT    TERMINAL POINT    STARTING POINT    TERMINAL POINT

TIME

(b)

BLOCK 1    BLOCK 2    BLOCK 3

TIME

(c)

# FIG. 10

POWER

FIRST DELAY
WAVE GROUP

SECOND DELAY
WAVE GROUP

THIRD DELAY
WAVE GROUP

TIME

(a)

CLUSTERING

CLUSTERING

CLUSTERING

TIME

(b)

# FIG. 11

(a)

(b)

(c)

FIG. 12

CLUSTERING

CLUSTERING

CROSS POINT
WITH THRESHOLD

THRESHOLD

STARTING
POINT

TERMINAL
POINT

STARTING
POINT

TERMINAL
POINT

TIME

FIG. 13

CLUSTERING

CLUSTERING

TERMINAL
POINT

MINIMUM VALUE

STARTING
POINT

STARTING
POINT

TERMINAL
POINT

TIME

FIG. 14

FIG. 15

FIG. 16

FIG. 17

# FIG. 18

FREQUENCY

(a)

FREQUENCY

(b)

# FIG. 19

(a)

FREQUENCY

SFfreq

(b)

$C_{8,1}$ | 1 | 1 | 1 | 1 | 1 | 1 | 1 | 1

$C_{8,2}$ | 1 | 1 | 1 | 1 | −1 | −1 | −1 | −1

ORTHOGONAL

$C_{8,7}$ | 1 | −1 | −1 | 1 | 1 | −1 | −1 | 1

# FIG. 20

3dB

FADING

FREQUENCY

SFfreq

| $C'_{8,1}$ | 0.5 | 0.5 | 0.5 | 0.5 | 0.5 | 0.5 | 0.5 | 0.5 |
|---|---|---|---|---|---|---|---|---|
| $C'_{8,2}$ | 0.5 | 0.5 | 0.5 | 0.5 | -0.5 | -0.5 | -0.5 | -0.5 |
| $C'_{8,7}$ | 0.5 | -0.5 | -0.5 | 0.5 | 0.5 | -0.5 | -0.5 | 0.5 |

DESPREADING

4
0
0

$C_{8,1}=[1,1,1,1,1,1,1,1]$

(a)

6dB

FADING

FREQUENCY

SFfreq

| $C''_{8,1}$ | 1 | 1 | 1 | 1 | 0.25 | 0.25 | 0.25 | 0.25 |
|---|---|---|---|---|---|---|---|---|
| $C''_{8,2}$ | 1 | 1 | 1 | 1 | -0.25 | -0.25 | -0.25 | -0.25 |
| $C''_{8,7}$ | 1 | -1 | -1 | 1 | 0.25 | -0.25 | -0.25 | 0.25 |

5
3
0

DESPREADING

(b)

$C_{8,1}=[1,1,1,1,1,1,1,1]$

**INTERNATIONAL SEARCH REPORT**

| | International application No. |
| --- | --- |
| | PCT/JP2008/061537 |

A.  CLASSIFICATION OF SUBJECT MATTER
*H04J11/00*(2006.01)i, *H04B1/707*(2006.01)i

According to International Patent Classification (IPC) or to both national classification and IPC

B.  FIELDS SEARCHED

Minimum documentation searched (classification system followed by classification symbols)
H04J11/00, H04B1/707

Documentation searched other than minimum documentation to the extent that such documents are included in the fields searched
Jitsuyo Shinan Koho        1922–1996   Jitsuyo Shinan Toroku Koho   1996–2008
Kokai Jitsuyo Shinan Koho   1971–2008   Toroku Jitsuyo Shinan Koho   1994–2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 2005-150839 A  (NTT Docomo Inc.),<br>09 June, 2005 (09.06.05),<br>Par. No. [0034]; Figs. 19, 21<br>& EP 1531592 A2        & US 2005/0129136 A1<br>& CN 1617534 A | 1,9<br>2-8 |
| A | JP 2005-079911 A  (Fujitsu Ltd.),<br>24 March, 2005 (24.03.05),<br>Full text; all drawings<br>(Family: none) | 1-9 |
| A | JP 2006-325063 A  (Fujitsu Ltd.),<br>30 November, 2006 (30.11.06),<br>Full text; all drawings<br>& EP 1724980 A2        & US 2006/0262869 A1 | 1-9 |

☒  Further documents are listed in the continuation of Box C.          ☐  See patent family annex.

| | |
| --- | --- |
| * Special categories of cited documents:<br>"A"  document defining the general state of the art which is not considered  to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>11 September, 2008 (11.09.08) | Date of mailing of the international search report<br>22 September, 2008 (22.09.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/061537 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-328391 A  (Japan Telecom Co., Ltd.),<br>24 November, 2005 (24.11.05),<br>Full text; all drawings<br>(Family: none) | 1-9 |
| A | JP 2007-013584 A  (NEC Corp.),<br>18 January, 2007 (18.01.07),<br>Full text; all drawings<br>& US 2007/0002985 A1 | 1-9 |
| A | JP 2007-006067 A  (Toshiba Corp.),<br>11 January, 2007 (11.01.07),<br>Full text; all drawings<br>& EP 1737177 A2        & US 2006/0291375 A1<br>& CN 1885840 A | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007167406 A
- JP 2004221702 A
- JP 2005198223 A

**Non-patent literature cited in the description**

- **Zhou, Y. ; Wang, J. ; Sawahashi, M.** Downlink Transmission of Broadband OFCDM Systems-Part I: Hybrid Detection. *IEEE Transactions on Communication,* vol. 53 (4), 718-729